(19) Europäisches Patentamt
European Patent Office
Office européen des brevets

(11) **EP 3 306 555 A1**

(12) **EUROPEAN PATENT APPLICATION**

(43) Date of publication:
**11.04.2018 Bulletin 2018/15**

(51) Int Cl.:
***G06Q 50/00*** *(2012.01)*     ***G06K 9/00*** *(2006.01)*

(21) Application number: **17168444.2**

(22) Date of filing: **27.04.2017**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**MA MD**<br><br>(30) Priority: **10.10.2016 US 201615289532<br>11.10.2016 PCT/US2016/056364**<br><br>(71) Applicant: **Facebook, Inc.**<br>**Menlo Park, CA 94025 (US)** | (72) Inventors:<br>• **STOOP, Dirk John**<br>**Menlo Park, CA California 94025 (US)**<br>• **BALMANOHAR, Paluri**<br>**Menlo Park, CA California 94025 (US)**<br><br>(74) Representative: **Schröer, Gernot H.**<br>**Meissner Bolte Patentanwälte<br>Rechtsanwälte Partnerschaft mbB<br>Bankgasse 3<br>90402 Nürnberg (DE)** |

(54) **DIVERSIFYING MEDIA SEARCH RESULTS ON ONLINE SOCIAL NETWORKS**

(57) In one embodiment, a method includes receiving a query of a first user; retrieving videos that match the query; determining a filtered set of videos, wherein the filtering includes removing duplicate videos based on the duplicate videos having a digital fingerprint that is within a threshold degree of sameness from that of a modal video; calculating, for each video, similarity-scores that correspond to a degree of similarity between the video and another video in the filtered set; grouping the videos into clusters that include videos with similarity-scores greater than a threshold similarity-score with respect to each other video in the cluster; and sending, to the first user, a search-results interface including search results for the videos that are organized within the interface based on the respective clusters of their corresponding videos.

**700**

710 — receiving, from a client system of a first user, a search query inputted by the first user

720 — retrieving an initial set of videos that match the search query

730 — filtering the initial set of videos to determine a filtered set of videos, wherein the filtering comprises, for each of one or more preferred videos in the initial set of videos, removing from the initial set of videos one or more duplicate videos based on the one or more duplicate videos having a digital-fingerprint that is within a threshold degree of sameness from a digital-fingerprint of the preferred video

740 — calculating, for each video in the filtered set, one or more similarity-scores with respect to one or more other videos in the filtered set, respectively, wherein each similarity-score corresponds to a degree of similarity in the features of the video with the respective other video;

750 — grouping the videos in the filtered set into a plurality of clusters, each cluster comprising videos having a similarity-score greater than a threshold similarity-score with respect to each other video in the cluster

760 — sending, to the client system of the first user for display, a search-results interface comprising one or more search results for one or more videos in the filtered set, respectively, wherein the search results are organized within the search-results interface based on the respective clusters of their corresponding videos

***FIG. 7***

EP 3 306 555 A1

**Description**

TECHNICAL FIELD

This disclosure generally relates to social graphs and performing searches for objects within a social-networking environment.

BACKGROUND

A social-networking system, which may include a social-networking website, may enable its users (such as persons or organizations) to interact with it and with each other through it. The social-networking system may, with input from a user, create and store in the social-networking system a user profile associated with the user. The user profile may include demographic information, communication-channel information, and information on personal interests of the user. The social-networking system may also, with input from a user, create and store a record of relationships of the user with other users of the social-networking system, as well as provide services (e.g. wall posts, photo-sharing, event organization, messaging, games, or advertisements) to facilitate social interaction between or among users.

The social-networking system may send over one or more networks content or messages related to its services to a mobile or other computing device of a user. A user may also install software applications on a mobile or other computing device of the user for accessing a user profile of the user and other data within the social-networking system. The social-networking system may generate a personalized set of content objects to display to a user, such as a newsfeed of aggregated stories of other users connected to the user.

Social-graph analysis views social relationships in terms of network theory consisting of nodes and edges. Nodes represent the individual actors within the networks, and edges represent the relationships between the actors. The resulting graph-based structures are often very complex. There can be many types of nodes and many types of edges for connecting nodes. In its simplest form, a social graph is a map of all of the relevant edges between all the nodes being studied.

SUMMARY OF PARTICULAR EMBODIMENTS

A platform such as the social-networking system that allows for the uploading, hosting, or sharing of video content is often encumbered with multiple instances of video content that are merely duplicates (i.e., identical copies or near-identical copies with minor modifications). The presence of such duplicates may be due to uploaders wanting to build their own following rather than promote a following for the original uploader or creator of the video. Such uploaders may re-upload a video that already exists on the social-networking system as is, or with minor modifications (e.g., in an attempt to avoid copyright detection, to personalize the video in some way). The presence of duplicates may also stem from users wanting to make minor changes according to personal preferences or add minor commentary to the videos, without changing the videos too much. One problem that arises from the existence of these duplicates on the social-networking system is that a search query specifying a set of search terms (e.g., "cat robot vacuum video") may return a set of search results replete with these identical copies (e.g., identical copies of a particular video of a cat on an autonomous robotic vacuum cleaner) and minor modifications (e.g., a copy of the same video but with the text "lol" displayed in the top matte of a letterbox on the video), causing a lack of diversity in the set of search results. A lack of diversity may result in a negative search experience for the querying user and may reduce the chance of the querying user finding other interesting videos. For the same reason, a set of search results corresponding to videos that are very similar (e.g., a video of a shot-by-shot reenactment of the original "cat on a vacuum cleaner" video) to each other may also be suboptimal. The methods described herein attempt to reduce a lack of diversity in search results by promoting unique instances of video content (e.g., an original instance, the most interesting video among very similar videos, etc.) and suppressing videos that are duplicates or videos that are too similar to the unique instances. Although this disclosure focuses on diversifying video search results, it contemplates diversifying other types of media search results (e.g., news search results, audio search results, etc.). Furthermore, although this disclosure focuses on applying the methods described herein in the context of the social-networking system, it contemplates applying the same or similar methods in any other suitable context (e.g., in the context of any other system or platform with media-uploading, media-hosting, or media-sharing capabilities).

In particular embodiments, the social-networking system may receive a search query inputted by a querying user (e.g., from a client system of the querying user). The social-networking system may retrieve an initial set of videos that match the search query. The social-networking system may filter the initial set of videos to determine a filtered set of videos. The filtering may include removing, from the initial set, one or more videos that are "duplicates" of a "modal" video (e.g., the original video, an optimal instance of the video) in the initial set of videos. Duplicate videos may include videos that are identical copies or near-identical copies. A video may be identified as a duplicate video based on it having a digital fingerprint that is within a threshold degree of sameness from a digital fingerprint of a modal video. The social-networking system may calculate, for each video in the filtered set, one or more similarity-scores with respect to one or more other videos in the filtered set, respectively. Each similarity-score may correspond to a degree of similarity in the features of the video with the respective other video. The social-networking system may group the videos in the filtered set into a plurality of clusters. Each cluster may include videos having a similarity-score greater than a threshold similarity-score with respect to each other video in the cluster. The social-networking system may send, to the client system of the first user for display, a search-results interface that includes one or more search results for one or more videos in the filtered set, respectively. The search results may be organized within the search-results interface based on the respective clusters of their corresponding videos.

The embodiments disclosed herein are only examples, and the scope of this disclosure is not limited to them. Particular embodiments may include all, some, or none of the components, elements, features, functions, operations, or steps of the embodiments disclosed above. Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

In an embodiment according to the invention a method comprises, by one or more computing systems:

receiving, from a client system of a first user, a search query inputted by the first user;
retrieving an initial set of videos that match the search query;
filtering the initial set of videos to determine a filtered set of videos, wherein the filtering comprises, for each of one or more modal videos in the initial set of videos, removing from the initial set of videos one or more duplicate videos based on the one or more duplicate videos having a digital fingerprint that is within a threshold degree of sameness from a digital fingerprint of the modal video;
calculating, for each video in the filtered set, one or more similarity-scores with respect to one or more other videos in the filtered set, respectively, wherein each similarity-score corresponds to a degree of similarity in the features of the video with the respective other video;
grouping the videos in the filtered set into a plurality of clusters, each cluster comprising videos having a similarity-score greater than a threshold similarity-score with respect to each other video in the cluster; and
sending, to the client system of the first user for display, a search-results interface comprising one or more search results for one or more videos in the filtered set, respectively, wherein the search results are organized within the search-results interface based on the respective clusters of their corresponding videos.

In an embodiment according to the invention a method may comprise:

accessing a social graph comprising a plurality of nodes and a plurality of edges connecting the nodes, each of the edges between two of the nodes representing a single degree of separation between them, the nodes comprising:

a first node corresponding to a first user associated with an online social network; and
a plurality of second nodes that each correspond to a concept or a second user associated with the online social network.

The digital fingerprint of a respective video may be based on one or more of a respective audio digital fingerprint or a respective video digital fingerprint.
The filtering may comprise executing a fuzzy-fingerprint matching algorithm to identify one or more distorted or noisy versions of the modal video to remove from the initial set of videos.
The filtering may comprise detecting the presence of a watermark on the one or more duplicate videos.
Calculating the one or more similarity-scores with respect to the one or more other videos may comprise, for each video in the filtered set:

identifying one or more visual features of the video based on an image-recognition process;

determining one or more concepts associated with the video based on its visual features;

generating, in a d-dimensional space, an embedding for the video based on its associated concepts;

determining, for each of the one or more other videos in the filtered set, one or more concepts associated with the other video based on its visual features;

generating, in the d-dimensional space, one or more embeddings for the other videos based on their respective associated concepts; and

calculating, in the d-dimensional space, one or more distances between the embedding for the video and the respective embeddings for the other videos.

The one or more concepts associated with the video may be determined based on one or more identified audio features of the video.

The one or more concepts associated with the video may be determined based on text associated with the video, the text having been extracted from one or more communications associated with the video or from metadata associated with the video.

Calculating the one or more similarity-scores with respect to the one or more other videos may comprise, for each video in the filtered set:

generating a binary representation of the video;

generating, for each of one or more other videos in the filtered set, one or more binary representations of the other video; and

determining one or more hamming distances between the binary representation of the video and the respective binary representations of the other videos.

In an embodiment according to the invention a method may comprise, for each cluster in the plurality of clusters, calculating a video-score for each video in the cluster, wherein the video-score may predict a level of interest the first user has for the video, and wherein the video-score may be based on one or more of an affinity between the first user and a second user associated with the video, the number of social signals associated with the video, the age of the video, or the audiovisual quality of the video.

The search results may be displayed within one or more modules on the search-results interface, wherein each module corresponds to a cluster in the plurality of clusters, and wherein each module displays one or more search results associated with one or more respective videos having a video-score greater than a threshold video-score.

In an embodiment according to the invention a method may comprise:

receiving, from the first user, an input at an interactive element corresponding to a particular cluster; and

sending, for display, one or more additional search results corresponding to one or more videos, respectively, of the particular cluster.

The search results may be displayed within a video-search-results module, wherein the video-search-results module is one of a plurality of modules displayed on the search-results interface, wherein each module of the plurality of modules includes search results corresponding to objects of a single object-type, and wherein the video-search-results module displays one or more search results associated with one or more respective videos having a video-score greater than a threshold video-score.

The search results may be displayed as a list of search results, the search results being listed in ranked order based on the respective video-scores of the corresponding videos within their respective clusters and further based on a cluster-diversity algorithm, wherein the cluster-diversity algorithm requires a number of search results from each cluster to be present among a top-ranked group of the search results.

A first search result corresponding to a first video of a particular cluster may be up-ranked on the list and a second search result corresponding to a second video of the particular cluster may be down-ranked on the list, wherein the first video has a higher video-score than the second video and wherein the second video has a similarity-score that is above an upper-threshold similarity-score.

In an embodiment according to the invention a method may comprise organizing the search results within the search-results interface, wherein the organizing may comprise:

calculating, for each cluster in the plurality of clusters, a cluster-score based on a relevance of one or more concepts associated with the videos of the cluster; and

ordering the search results based on the cluster-scores of their respective clusters.

The cluster-score for each cluster may be based on an affinity between the first user and one or more concepts associated with the videos of the cluster.

Calculating the one or more similarity-scores with respect to the one or more other videos may comprise, for each video in the filtered set:

dividing the video into one or more first-video segments;
dividing each of one or more other videos in the filtered set into one or more respective second-video segments; and
determining a degree of similarity between each of one or more of the first-video segments and each of one or more of the second-video segments, respectively.

In a further embodiment according to the invention, one or more computer-readable non-transitory storage media embody software that is operable when executed to perform a method according to the invention or any of the above mentioned embodiments.

In a further embodiment according to the invention, a system comprises: one or more processors; and at least one memory coupled to the processors and comprising instructions executable by the processors, the processors operable when executing the instructions to perform a method according to the invention or any of the above mentioned embodiments.

In a further embodiment according to the invention, a computer program product, preferably comprising a computer-readable non-transitory storage media, is operable when executed on a data processing system to perform a method according to the invention or any of the above mentioned embodiments.

In a further embodiment according to the invention one or more computer-readable non-transitory storage media embodying software that is operable when executed to:

receive, from a client system of a first user, a search query inputted by the first user;
retrieve an initial set of videos that match the search query;
filter the initial set of videos to determine a filtered set of videos, wherein the filtering comprises, for each of one or more modal videos in the initial set of videos, removing from the initial set of videos one or more duplicate videos based on the one or more duplicate videos having a digital fingerprint that is within a threshold degree of sameness from a digital fingerprint of the modal video;
calculate, for each video in the filtered set, one or more similarity-scores with respect to one or more other videos in the filtered set, respectively, wherein each similarity-score corresponds to a degree of similarity in the features of the video with the respective other video;
group the videos in the filtered set into a plurality of clusters, each cluster comprising videos having a similarity-score greater than a threshold similarity-score with respect to each other video in the cluster; and
send, to the client system of the first user for display, a search-results interface comprising one or more search results for one or more videos in the filtered set, respectively, wherein the search results are organized within the search-results interface based on the respective clusters of their corresponding videos.

In a further embodiment according to the invention, a system comprises: one or more processors; and a non-transitory memory coupled to the processors comprising instructions executable by the processors, the processors operable when executing the instructions to:

receive, from a client system of a first user, a search query inputted by the first user;
retrieve an initial set of videos that match the search query;
filter the initial set of videos to determine a filtered set of videos, wherein the filtering comprises, for each of one or more modal videos in the initial set of videos, removing from the initial set of videos one or more duplicate videos based on the one or more duplicate videos having a digital fingerprint that is within a threshold degree of sameness from a digital fingerprint of the modal video;
calculate, for each video in the filtered set, one or more similarity-scores with respect to one or more other videos in the filtered set, respectively, wherein each similarity-score corresponds to a degree of similarity in the features of the video with the respective other video;
group the videos in the filtered set into a plurality of clusters, each cluster comprising videos having a similarity-score greater than a threshold similarity-score with respect to each other video in the cluster; and
send, to the client system of the first user for display, a search-results interface comprising one or more search results for one or more videos in the filtered set, respectively, wherein the search results are organized within the search-results interface based on the respective clusters of their corresponding videos.

BRIEF DESCRIPTION OF THE DRAWINGS

FIG. 1    illustrates an example network environment associated with a social-networking system.
FIG. 2    illustrates an example social graph.
FIG. 3    illustrates an example search-results interface that includes a video-search-results module.
FIG. 4    illustrates an example view of an embedding space.
FIG. 5    illustrates an example search-results interface that displays video search results grouped by their respective clusters.
FIG. 6    illustrates an example search-results interface that displays video search results in a list format.
FIG. 7    illustrates an example method for diversifying video search results.
FIG. 8    illustrates an example computer system.

DESCRIPTION OF EXAMPLE EMBODIMENTS

System Overview

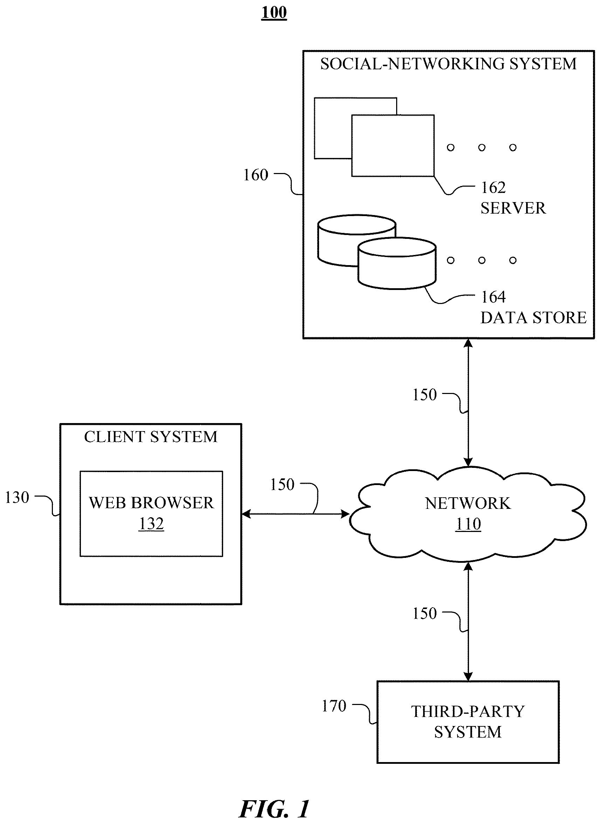

FIG. 1 illustrates an example network environment 100 associated with a social-networking system. Network environment 100 includes a client system 130, a social-networking system 160, and a third-party system 170 connected to each other by a network 110. Although FIG. 1 illustrates a particular arrangement of a client system 130, a social-networking system 160, a third-party system 170, and a network 110, this disclosure contemplates any suitable arrangement of a client system 130, a social-networking system 160, a third-party system 170, and a network 110. As an example and not by way of limitation, two or more of a client system 130, a social-networking system 160, and a third-party system 170 may be connected to each other directly, bypassing a network 110. As another example, two or more of a client system 130, a social-networking system 160, and a third-party system 170 may be physically or logically co-located with each other in whole or in part. Moreover, although FIG. 1 illustrates a particular number of client systems 130, social-networking systems 160, third-party systems 170, and networks 110, this disclosure contemplates any suitable number of client systems 130, social-networking systems 160, third-party systems 170, and networks 110. As an example and not by way of limitation, network environment 100 may include multiple client systems 130, social-networking systems 160, third-party systems 170, and networks 110.

This disclosure contemplates any suitable network 110. As an example and not by way of limitation, one or more portions of a network 110 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. A network 110 may include one or more networks 110.

Links 150 may connect a client system 130, a social-networking system 160, and a third-party system 170 to a communication network 110 or to each other. This disclosure contemplates any suitable links 150. In particular embodiments, one or more links 150 include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular embodiments, one or more links 150 each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 150, or a combination of two or more such links 150. Links 150 need not necessarily be the same throughout a network environment 100. One or more first links 150 may differ in one or more respects from one or more second links 150.

In particular embodiments, a client system 130 may be an electronic device including hardware, software, or embedded logic components or a combination of two or more such components and capable of carrying out the appropriate functionalities implemented or supported by a client system 130. As an example and not by way of limitation, a client system 130 may include a computer system such as a desktop computer, notebook or laptop computer, netbook, a tablet computer, e-book reader, GPS device, camera, personal digital assistant (PDA), handheld electronic device, cellular telephone, smartphone, other suitable electronic device, or any suitable combination thereof. This disclosure contemplates any suitable client systems 130. A client system 130 may enable a network user at a client system 130 to access a network 110. A client system 130 may enable its user to communicate with other users at other client systems 130.

In particular embodiments, a client system 130 may include a web browser 132, such as MICROSOFT INTERNET EXPLORER, GOOGLE CHROME or MOZILLA FIREFOX, and may have one or more add-ons, plug-ins, or other extensions, such as TOOLBAR or YAHOO TOOLBAR. A user at a client system 130 may enter a Uniform Resource Locator (URL) or other address directing a web browser 132 to a particular server (such as server 162, or a server associated with a third-party system 170), and the web browser 132 may generate a Hyper Text Transfer Protocol (HTTP) request and communicate the HTTP request to server. The server may accept the HTTP request and communicate to a client system 130 one or more Hyper Text Markup Language (HTML) files responsive to the HTTP request. The client system 130 may render a web interface (e.g. a webpage) based on the HTML files from the server for presentation to the user. This disclosure contemplates any suitable source files. As an example and not by way of limitation, a web interface may be rendered from HTML files, Extensible Hyper Text Markup Language (XHTML) files, or Extensible Markup Language (XML) files, according to particular needs. Such interfaces may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a web interface encompasses one or more corresponding source files (which a browser may use to render the web interface) and vice versa, where appropriate.

In particular embodiments, the social-networking system 160 may be a network-addressable computing system that can host an online social network. The social-networking system 160 may generate, store, receive, and send social-networking data, such as, for example, user-profile data, concept-profile data, social-graph information, or other suitable data related to the online social network. The social-networking system 160 may be accessed by the other components of network environment 100 either directly or via a network 110. As an example and not by way of limitation, a client system 130 may access the social-networking system 160 using a web browser 132, or a native application associated with the social-networking system 160 (e.g., a mobile social-networking application, a messaging application, another suitable application, or any combination thereof) either directly or via a network 110. In particular embodiments, the social-networking system 160 may include one or more servers 162. Each server 162 may be a unitary server or a distributed server spanning multiple computers or multiple datacenters. Servers 162 may be of various types, such as, for example and without limitation, web server, news server, mail server, message server, advertising server, file server, application server, exchange server, database server, proxy server, another server suitable for performing functions or processes described herein, or any combination thereof. In particular embodiments, each server 162 may include hardware, software, or embedded logic components or a combination of two or more such components for carrying out the appropriate functionalities implemented or supported by server 162. In particular embodiments, the social-networking system 160 may include one or more data stores 164. Data stores 164 may be used to store various types of information. In particular embodiments, the information stored in data stores 164 may be organized according to specific data structures. In particular embodiments, each data store 164 may be a relational, columnar, correlation, or other suitable database. Although this disclosure describes or illustrates particular types of databases, this disclosure contemplates any suitable types of databases. Particular embodiments may provide interfaces that enable a client system 130, a social-networking system 160, or a third-party system 170 to manage, retrieve, modify, add, or delete, the information stored in data store 164.

In particular embodiments, the social-networking system 160 may store one or more social graphs in one or more data stores 164. In particular embodiments, a social graph may include multiple nodes-which may include multiple user nodes (each corresponding to a particular user) or multiple concept nodes (each corresponding to a particular concept)-and multiple edges connecting the nodes. The social-networking system 160 may provide users of the online social network the ability to communicate and interact with other users. In particular embodiments, users may join the online social network via the social-networking system 160 and then add connections (e.g., relationships) to a number of other users of the social-networking system 160 whom they want to be connected to. Herein, the term "friend" may refer to any other user of the social-networking system 160 with whom a user has formed a connection, association, or relationship via the social-networking system 160.

In particular embodiments, the social-networking system 160 may provide users with the ability to take actions on various types of items or objects, supported by the social-networking system 160. As an example and not by way of limitation, the items and objects may include groups or social networks to which users of the social-networking system 160 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in the social-networking system 160 or by an external system of a third-party system 170, which is separate from the social-networking system 160 and coupled to the social-networking system 160 via a network 110.

In particular embodiments, the social-networking system 160 may be capable of linking a variety of entities. As an example and not by way of limitation, the social-networking system 160 may enable users to interact with each other as well as receive content from third-party systems 170 or other entities, or to allow users to interact with these entities through an application programming interfaces (API) or other communication channels.

In particular embodiments, a third-party system 170 may include one or more types of servers, one or more data stores, one or more interfaces, including but not limited to APIs, one or more web services, one or more content sources, one or more networks, or any other suitable components, e.g., that servers may communicate with. A third-party system 170 may be operated by a different entity from an entity operating the social-networking system 160. In particular embodiments, however, the social-networking system 160 and third-party systems 170 may operate in conjunction with each other to provide social-networking services to users of the social-networking system 160 or third-party systems 170. In this sense, the social-networking system 160 may provide a platform, or backbone, which other systems, such as third-party systems 170, may use to provide social-networking services and functionality to users across the Internet.

In particular embodiments, a third-party system 170 may include a third-party content object provider. A third-party content object provider may include one or more sources of content objects, which may be communicated to a client system 130. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular embodiments, the social-networking system 160 also includes user-generated content objects, which may enhance a user's interactions with the social-networking system 160. User-generated content may include anything a user can add, upload, send, or "post" to the social-networking system 160. As an example and not by way of limitation, a user communicates posts to the social-networking system 160 from a client system 130. Posts may include data such as status updates or other textual data, location information, photos, videos, links, music or other similar data or media. Content may also be added to the social-networking system 160 by a third-party through a "communication channel," such as a newsfeed or stream.

In particular embodiments, the social-networking system 160 may include a variety of servers, sub-systems, programs, modules, logs, and data stores. In particular embodiments, the social-networking system 160 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. The social-networking system 160 may also include suitable components such as network interfaces, security mechanisms, load balancers, failover servers, management-and-network-operations consoles, other suitable components, or any suitable combination thereof. In particular embodiments, the social-networking system 160 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking the social-networking system 160 to one or more client systems 130 or one or more third-party systems 170 via a network 110. The web server may include a mail server or other messaging functionality for receiving and routing messages between the social-networking system 160 and one or more client systems 130. An API-request server may allow a third-party system 170 to access information from the social-networking system 160 by calling one or more APIs. An action logger may be used to receive communications from a web server about a user's actions on or off the social-networking system 160. In conjunction with the action log, a third-party-content-object log may be maintained of user exposures to third-party-content objects. A notification controller may provide information regarding content objects to a client system 130. Information may be pushed to a client system 130 as notifications, or information may be pulled from a client system 130 responsive to a request received from a client system 130. Authorization servers may be used to enforce one or more privacy settings of the users of the social-networking system 160. A privacy setting of a user determines how particular information associated with a user can be shared. The authorization server may allow users to opt in to or opt out of having their actions logged by the social-networking system 160 or shared with other systems (e.g., a third-party system 170), such as, for example, by setting appropriate privacy settings. Third-party-content-object stores may be used to store content objects received from third parties, such as a third-party system 170. Location stores may be used for storing location information received from client systems 130 associated with users. Advertisement-pricing modules may combine social information, the current time, location information, or other suitable information to provide relevant advertisements, in the form of notifications, to a user.

Social Graphs

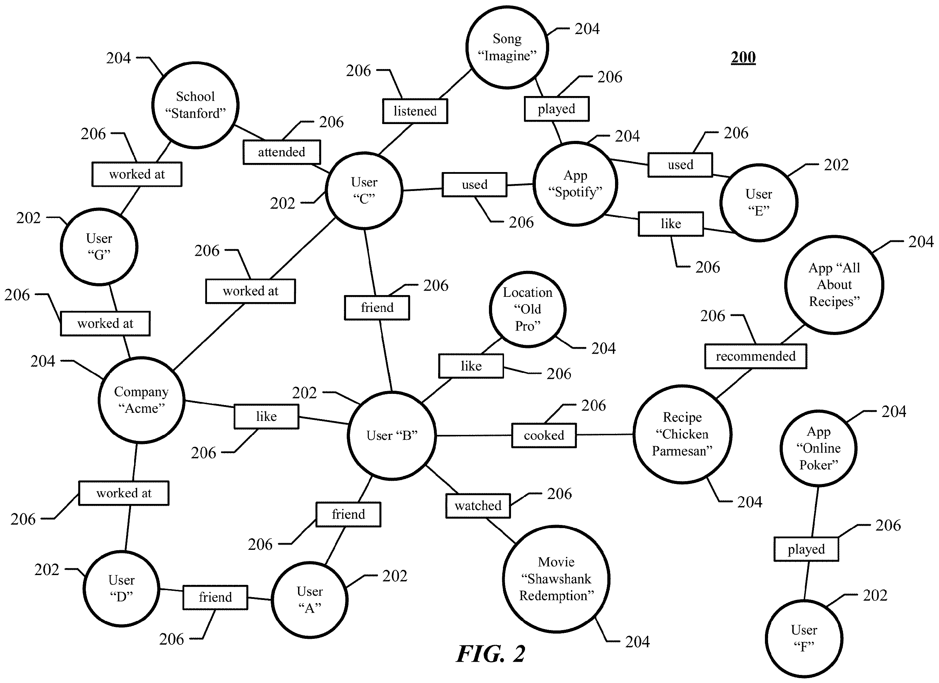

FIG. 2 illustrates an example social graph 200. In particular embodiments, the social-networking system 160 may store one or more social graphs 200 in one or more data stores. In particular embodiments, the social graph 200 may include multiple nodes-which may include multiple user nodes 202 or multiple concept nodes 204-and multiple edges 206 connecting the nodes. The example social graph 200 illustrated in FIG. 2 is shown, for didactic purposes, in a two-dimensional visual map representation. In particular embodiments, a social-networking system 160, a client system 130, or a third-party system 170 may access the social graph 200 and related social-graph information for suitable applications. The nodes and edges of the social graph 200 may be stored as data objects, for example, in a data store (such as a social-graph database). Such a data store may include one or more searchable or queryable indexes of nodes or edges of the social graph 200.

In particular embodiments, a user node 202 may correspond to a user of the social-networking system 160. As an example and not by way of limitation, a user may be an individual (human user), an entity (e.g., an enterprise, business, or third-party application), or a group (e.g., of individuals or entities) that interacts or communicates with or over the social-networking system 160. In particular embodiments, when a user registers for an account with the social-networking system 160, the social-networking system 160 may create a user node 202 corresponding to the user, and store the user node 202 in one or more data stores. Users and user nodes 202 described herein may, where appropriate, refer to registered users and user nodes 202 associated with registered users. In addition or as an alternative, users and user nodes 202 described herein may, where appropriate, refer to users that have not registered with the social-networking system 160. In particular embodiments, a user node 202 may be associated with information provided by a user or information gathered by various systems, including the social-networking system 160. As an example and not by way of limitation, a user may provide his or her name, profile picture, contact information, birth date, sex, marital status, family status, employment, education background, preferences, interests, or other demographic information. In particular embodiments, a user node 202 may be associated with one or more data objects corresponding to information associated with a user. In particular embodiments, a user node 202 may correspond to one or more web interfaces.

In particular embodiments, a concept node 204 may correspond to a concept. As an example and not by way of limitation, a concept may correspond to a place (such as, for example, a movie theater, restaurant, landmark, or city); a website (such as, for example, a website associated with the social-networking system 160 or a third-party website associated with a web-application server); an entity (such as, for example, a person, business, group, sports team, or celebrity); a resource (such as, for example, an audio file, video file, digital photo, text file, structured document, or application) which may be located within the social-networking system 160 or on an external server, such as a web-application server; real or intellectual property (such as, for example, a sculpture, painting, movie, game, song, idea, photograph, or written work); a game; an activity; an idea or theory; another suitable concept; or two or more such concepts. A concept node 204 may be associated with information of a concept provided by a user or information gathered by various systems, including the social-networking system 160. As an example and not by way of limitation, information of a concept may include a name or a title; one or more images (e.g., an image of the cover page of a book); a location (e.g., an address or a geographical location); a website (which may be associated with a URL); contact information (e.g., a phone number or an email address); other suitable concept information; or any suitable combination of such information. In particular embodiments, a concept node 204 may be associated with one or more data objects corresponding to information associated with concept node 204. In particular embodiments, a concept node 204 may correspond to one or more web interfaces.

In particular embodiments, a node in the social graph 200 may represent or be represented by a web interface (which may be referred to as a "profile interface"). Profile interfaces may be hosted by or accessible to the social-networking system 160. Profile interfaces may also be hosted on third-party websites associated with a third-party server 170. As an example and not by way of limitation, a profile interface corresponding to a particular external web interface may be the particular external web interface and the profile interface may correspond to a particular concept node 204. Profile interfaces may be viewable by all or a selected subset of other users. As an example and not by way of limitation, a user node 202 may have a corresponding user-profile interface in which the corresponding user may add content, make declarations, or otherwise express himself or herself. As another example and not by way of limitation, a concept node 204 may have a corresponding concept-profile interface in which one or more users may add content, make declarations, or express themselves, particularly in relation to the concept corresponding to concept node 204.

In particular embodiments, a concept node 204 may represent a third-party web interface or resource hosted by a third-party system 170. The third-party web interface or resource may include, among other elements, content, a selectable or other icon, or other inter-actable object (which may be implemented, for example, in JavaScript, AJAX, or PHP codes) representing an action or activity. As an example and not by way of limitation, a third-party web interface may include a selectable icon such as "like," "check-in," "eat," "recommend," or another suitable action or activity. A user viewing the third-party web interface may perform an action by selecting one of the icons (e.g., "check-in"), causing a client system 130 to send to the social-networking system 160 a message indicating the user's action. In response to the message, the social-networking system 160 may create an edge (e.g., a check-in-type edge) between a user node 202 corresponding to the user and a concept node 204 corresponding to the third-party web interface or resource and store edge 206 in one or more data stores.

In particular embodiments, a pair of nodes in the social graph 200 may be connected to each other by one or more edges 206. An edge 206 connecting a pair of nodes may represent a relationship between the pair of nodes. In particular embodiments, an edge 206 may include or represent one or more data objects or attributes corresponding to the relationship between a pair of nodes. As an example and not by way of limitation, a first user may indicate that a second user is a "friend" of the first user. In response to this indication, the social-networking system 160 may send a "friend request" to the second user. If the second user confirms the "friend request," the social-networking system 160 may create an edge 206 connecting the first user's user node 202 to the second user's user node 202 in the social graph 200 and store edge 206 as social-graph information in one or more of data stores 164. In the example of FIG. 2, the social graph 200 includes an edge 206 indicating a friend relation between user nodes 202 of user "A" and user "B" and an edge indicating a friend relation between user nodes 202 of user "C" and user "B." Although this disclosure describes or illustrates particular edges 206 with particular attributes connecting particular user nodes 202, this disclosure contemplates any suitable edges 206 with any suitable attributes connecting user nodes 202. As an example and not by way of limitation, an edge 206 may represent a friendship, family relationship, business or employment relationship, fan relationship (including, e.g., liking, etc.), follower relationship, visitor relationship (including, e.g., accessing, viewing, checking-in, sharing, etc.), subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in the social graph 200 by one or more edges 206.

In particular embodiments, an edge 206 between a user node 202 and a concept node 204 may represent a particular action or activity performed by a user associated with user node 202 toward a concept associated with a concept node 204. As an example and not by way of limitation, as illustrated in FIG. 2, a user may "like," "attended," "played," "listened," "cooked," "worked at," or "watched" a concept, each of which may correspond to an edge type or subtype. A concept-profile interface corresponding to a concept node 204 may include, for example, a selectable "check in" icon (such as, for example, a clickable "check in" icon) or a selectable "add to favorites" icon. Similarly, after a user clicks these icons, the social-networking system 160 may create a "favorite" edge or a "check in" edge in response to a user's action corresponding to a respective action. As another example and not by way of limitation, a user (user "C") may listen to a particular song ("Imagine") using a particular application (SPOTIFY, which is an online music application). In this case, the social-networking system 160 may create a "listened" edge 206 and a "used" edge (as illustrated in FIG. 2) between user nodes 202 corresponding to the user and concept nodes 204 corresponding to the song and application to indicate that the user listened to the song and used the application. Moreover, the social-networking system 160 may create a "played" edge 206 (as illustrated in FIG. 2) between concept nodes 204 corresponding to the song and the application to indicate that the particular song was played by the particular application. In this case, "played" edge 206 corresponds to an action performed by an external application (SPOTIFY) on an external audio file (the song "Imagine"). Although this disclosure describes particular edges 206 with particular attributes connecting user nodes 202 and concept nodes 204, this disclosure contemplates any suitable edges 206 with any suitable attributes connecting user nodes 202 and concept nodes 204. Moreover, although this disclosure describes edges between a user node 202 and a concept node 204 representing a single relationship, this disclosure contemplates edges between a user node 202 and a concept node 204 representing one or more relationships. As an example and not by way of limitation, an edge 206 may represent both that a user likes and has used at a particular concept. Alternatively, another edge 206 may represent each type of relationship (or multiples of a single relationship) between a user node 202 and a concept node 204 (as illustrated in FIG. 2 between user node 202 for user "E" and concept node 204 for "SPOTIFY").

In particular embodiments, the social-networking system 160 may create an edge 206 between a user node 202 and a concept node 204 in the social graph 200. As an example and not by way of limitation, a user viewing a concept-profile interface (such as, for example, by using a web browser or a special-purpose application hosted by the user's client system 130) may indicate that he or she likes the concept represented by the concept node 204 by clicking or selecting a "Like" icon, which may cause the user's client system 130 to send to the social-networking system 160 a message indicating the user's liking of the concept associated with the concept-profile interface. In response to the message, the social-networking system 160 may create an edge 206 between user node 202 associated with the user and concept node 204, as illustrated by "like" edge 206 between the user and concept node 204. In particular embodiments, the social-networking system 160 may store an edge 206 in one or more data stores. In particular embodiments, an edge 206 may be automatically formed by the social-networking system 160 in response to a particular user action. As an example and not by way of limitation, if a first user uploads a picture, watches a movie, or listens to a song, an edge 206 may be formed between user node 202 corresponding to the first user and concept nodes 204 corresponding to those concepts. Although this disclosure describes forming particular edges 206 in particular manners, this disclosure contemplates forming any suitable edges 206 in any suitable manner.

Search Queries on Online Social Networks

In particular embodiments, a user may submit a query to the social-networking system 160 by, for example, selecting a query input or inputting text into query field. A user of an online social network may search for information relating to a specific subject matter (e.g., users, concepts, external content or resource) by providing a short phrase describing the subject matter, often referred to as a "search query," to a search engine. The query may be an unstructured text query and may comprise one or more text strings (which may include one or more n-grams). In general, a user may input any character string into a query field to search for content on the social-networking system 160 that matches the text query. The social-networking system 160 may then search a data store 164 (or, in particular, a social-graph database) to identify content matching the query. The search engine may conduct a search based on the query phrase using various search algorithms and generate search results that identify resources or content (e.g., user-profile interfaces, content-profile interfaces, or external resources) that are most likely to be related to the search query. To conduct a search, a user may input or send a search query to the search engine. In response, the search engine may identify one or more resources that are likely to be related to the search query, each of which may individually be referred to as a "search result," or collectively be referred to as the "search results" corresponding to the search query. The identified content may include, for example, social-graph elements (i.e., user nodes 202, concept nodes 204, edges 206), profile interfaces, external web interfaces, or any combination thereof. The social-networking system 160 may then generate a search-results interface with search results corresponding to the identified content and send the search-results interface to the user. The search results may be presented to the user, often in the form of a list of links on the search-results interface, each link being associated with a different interface that contains some of the identified resources or content. In particular embodiments, each link in the search results may be in the form of a Uniform Resource Locator (URL) that specifies where the corresponding interface is located and the mechanism for retrieving it. The social-networking system 160 may then send the search-results interface to the web browser 132 on the user's client system 130. The user may then click on the URL links or otherwise select the content from the search-results interface to access the content from the social-networking system 160 or from an external system (such as, for example, a third-party system 170), as appropriate. The resources may be ranked and presented to the user according to their relative degrees of relevance to the search query. The search results may also be ranked and presented to the user according to their relative degree of relevance to the user. In other words, the search results may be personalized for the querying user based on, for example, social-graph information, user information, search or browsing history of the user, or other suitable information related to the user. In particular embodiments, ranking of the resources may be determined by a ranking algorithm implemented by the search engine. As an example and not by way of limitation, resources that are more relevant to the search query or to the user may be ranked higher than the resources that are less relevant to the search query or the user. In particular embodiments, the search engine may limit its search to resources and content on the online social network. However, in particular embodiments, the search engine may also search for resources or contents on other sources, such as a third-party system 170, the internet or World Wide Web, or other suitable sources. Although this disclosure describes querying the social-networking system 160 in a particular manner, this disclosure contemplates querying the social-networking system 160 in any suitable manner.

Typeahead Processes and Queries

In particular embodiments, one or more client-side and/or backend (server-side) processes may implement and utilize a "typeahead" feature that may automatically attempt to match social-graph elements (e.g., user nodes 202, concept nodes 204, or edges 206) to information currently being entered by a user in an input form rendered in conjunction with a requested interface (such as, for example, a user-profile interface, a concept-profile interface, a search-results interface, a user interface/view state of a native application associated with the online social network, or another suitable interface of the online social network), which may be hosted by or accessible in the social-networking system 160. In particular embodiments, as a user is entering text to make a declaration, the typeahead feature may attempt to match the string of textual characters being entered in the declaration to strings of characters (e.g., names, descriptions) corresponding to users, concepts, or edges and their corresponding elements in the social graph 200. In particular embodiments, when a match is found, the typeahead feature may automatically populate the form with a reference to the social-graph element (such as, for example, the node name/type, node ID, edge name/type, edge ID, or another suitable reference or identifier) of the existing social-graph element. In particular embodiments, as the user enters characters into a form box, the typeahead process may read the string of entered textual characters. As each keystroke is made, the frontend-typeahead process may send the entered character string as a request (or call) to the backend-typeahead process executing within the social-networking system 160. In particular embodiments, the typeahead process may use one or more matching algorithms to attempt to identify matching social-graph elements. In particular embodiments, when a match or matches are found, the typeahead process may send a response to the user's client system 130 that may include, for example, the names (name strings) or descriptions of the matching social-graph elements as well as, potentially, other metadata associated with the matching social-graph elements. As an example and not by way of limitation, if a user enters the characters "pok" into a query field, the typeahead process may display a drop-down menu that displays names of matching existing profile interfaces and respective user nodes 202 or concept nodes 204, such as a profile interface named or devoted to "poker" or "pokemon," which the user can then click on or otherwise select thereby confirming the desire to declare the matched user or concept name corresponding to the selected node.

More information on typeahead processes may be found in U.S. Patent Application No. 12/763162, filed 19 April 2010, and U.S. Patent Application No. 13/556072, filed 23 July 2012, each of which is incorporated by reference.

In particular embodiments, the typeahead processes described herein may be applied to search queries entered by a user. As an example and not by way of limitation, as a user enters text characters into a query field, a typeahead process may attempt to identify one or more user nodes 202, concept nodes 204, or edges 206 that match the string of characters entered into the query field as the user is entering the characters. As the typeahead process receives requests or calls including a string or n-gram from the text query, the typeahead process may perform or cause to be performed a search to identify existing social-graph elements (i.e., user nodes 202, concept nodes 204, edges 206) having respective names, types, categories, or other identifiers matching the entered text. The typeahead process may use one or more matching algorithms to attempt to identify matching nodes or edges. When a match or matches are found, the typeahead process may send a response to the user's client system 130 that may include, for example, the names (name strings) of the matching nodes as well as, potentially, other metadata associated with the matching nodes. The typeahead process may then display a drop-down menu that displays names of matching existing profile interfaces and respective user nodes 202 or concept nodes 204, and displays names of matching edges 206 that may connect to the matching user nodes 202 or concept nodes 204, which the user can then click on or otherwise select thereby confirming the desire to search for the matched user or concept name corresponding to the selected node, or to search for users or concepts connected to the matched users or concepts by the matching edges. Alternatively, the typeahead process may simply auto-populate the form with the name or other identifier of the top-ranked match rather than display a drop-down menu. The user may then confirm the auto-populated declaration simply by keying "enter" on a keyboard or by clicking on the auto-populated declaration. Upon user confirmation of the matching nodes and edges, the typeahead process may send a request that informs the social-networking system 160 of the user's confirmation of a query containing the matching social-graph elements. In response to the request sent, the social-networking system 160 may automatically (or alternately based on an instruction in the request) call or otherwise search a social-graph database for the matching social-graph elements, or for social-graph elements connected to the matching social-graph elements as appropriate. Although this disclosure describes applying the typeahead processes to search queries in a particular manner, this disclosure contemplates applying the typeahead processes to search queries in any suitable manner.

In connection with search queries and search results, particular embodiments may utilize one or more systems, components, elements, functions, methods, operations, or steps disclosed in U.S. Patent Application No. 11/503093, filed 11 August 2006, U.S. Patent Application No. 12/977027, filed 22 December 2010, and U.S. Patent Application No. 12/978265, filed 23 December 2010, each of which is incorporated by reference.

Structured Search Queries

In particular embodiments, in response to a text query received from a first user (i.e., the querying user), the social-networking system 160 may parse the text query and identify portions of the text query that correspond to particular social-graph elements. However, in some cases a query may include one or more terms that are ambiguous, where an ambiguous term is a term that may possibly correspond to multiple social-graph elements. To parse the ambiguous term, the social-networking system 160 may access a social graph 200 and then parse the text query to identify the social-graph elements that corresponded to ambiguous n-grams from the text query. The social-networking system 160 may then generate a set of structured queries, where each structured query corresponds to one of the possible matching social-graph elements. These structured queries may be based on strings generated by a grammar model, such that they are rendered in a natural-language syntax with references to the relevant social-graph elements. As an example and not by way of limitation, in response to the text query, "show me friends of my girlfriend," the social-networking system 160 may generate a structured query "Friends of Stephanie," where "Friends" and "Stephanie" in the structured query are references corresponding to particular social-graph elements. The reference to "Stephanie" would correspond to a particular user node 202 (where the social-networking system 160 has parsed the n-gram "my girlfriend" to correspond with a user node 202 for the user "Stephanie"), while the reference to "Friends" would correspond to friend-type edges 206 connecting that user node 202 to other user nodes 202 (i.e., edges 206 connecting to "Stephanie's" first-degree friends). When executing this structured query, the social-networking system 160 may identify one or more user nodes 202 connected by friend-type edges 206 to the user node 202 corresponding to "Stephanie". As another example and not by way of limitation, in response to the text query, "friends who work at facebook," the social-networking system 160 may generate a structured query "My friends who work at Facebook," where "my friends," "work at," and "Facebook" in the structured query are references corresponding to particular social-graph elements as described previously (i.e., a friend-type edge 206, a work-at-type edge 206, and concept node 204 corresponding to the company "Facebook"). By providing suggested structured queries in response to a user's text query, the social-networking system 160 may provide a powerful way for users of the online social network to search for elements represented in the social graph 200 based on their social-graph attributes and their relation to various social-graph elements. Structured queries may allow a querying user to search for content that is connected to particular users or concepts in the social graph 200 by particular edge-types. The structured queries may be sent to the first user and displayed in a drop-down menu (via, for example, a client-side typeahead process), where the first user can then select an appropriate query to search for the desired content. Some of the advantages of using the structured queries described herein include finding users of the online social network based upon limited information, bringing together virtual indexes of content from the online social network based on the relation of that content to various social-graph elements, or finding content related to you and/or your friends. Although this disclosure describes generating particular structured queries in a particular manner, this disclosure contemplates generating any suitable structured queries in any suitable manner.

More information on element detection and parsing queries may be found in U.S. Patent Application No. 13/556072, filed 23 July 2012, U.S. Patent Application No. 13/731866, filed 31 December 2012, and U.S. Patent Application No. 13/732101, filed 31 December 2012, each of which is incorporated by reference. More information on structured search queries and grammar models may be found in U.S. Patent Application No. 13/556072, filed 23 July 2012, U.S. Patent Application No. 13/674695, filed 12 November 2012, and U.S. Patent Application No. 13/731866, filed 31 December 2012, each of which is incorporated by reference.

Generating Keywords and Keyword Queries

In particular embodiments, the social-networking system 160 may provide customized keyword completion suggestions to a querying user as the user is inputting a text string into a query field. Keyword completion suggestions may be provided to the user in a non-structured format. In order to generate a keyword completion suggestion, the social-networking system 160 may access multiple sources within the social-networking system 160 to generate keyword completion suggestions, score the keyword completion suggestions from the multiple sources, and then return the keyword completion suggestions to the user. As an example and not by way of limitation, if a user types the query "friends stan," then the social-networking system 160 may suggest, for example, "friends stanford," "friends stanford university," "friends stanley," "friends stanley cooper," "friends stanley kubrick," "friends stanley cup," and "friends stanlonski." In this example, the social-networking system 160 is suggesting the keywords which are modifications of the ambiguous n-gram "stan," where the suggestions may be generated from a variety of keyword generators. The social-networking system 160 may have selected the keyword completion suggestions because the user is connected in some way to the suggestions. As an example and not by way of limitation, the querying user may be connected within the social graph 200 to the concept node 204 corresponding to Stanford University, for example by like- or attended-type edges 206. The querying user may also have a friend named Stanley Cooper. Although this disclosure describes generating keyword completion suggestions in a particular manner, this disclosure contemplates generating keyword completion suggestions in any suitable manner.

More information on keyword queries may be found in U.S. Patent Application No. 14/244748, filed 03 April 2014, U.S. Patent Application No. 14/470607, filed 27 August 2014, and U.S. Patent Application No. 14/561418, filed 05 December 2014, each of which is incorporated by reference.

Diversifying Media Search Results

A platform such as the social-networking system 160 that allows for the uploading, hosting, or sharing of video content is often encumbered with multiple instances of video content that are merely duplicates (i.e., identical copies or near-identical copies with minor modifications). The presence of such duplicates may be due to uploaders wanting to build their own following rather than promote a following for the original uploader or creator of the video. Such uploaders may re-upload a video that already exists on the social-networking system 160 as is, or with minor modifications (e.g., in an attempt to avoid copyright detection, to personalize the video in some way). The presence of duplicates may also stem from users wanting to make minor changes according to personal preferences or add minor commentary to the videos, without changing the videos too much. One problem that arises from the existence of these duplicates on the social-networking system 160 is that a search query specifying a set of search terms (e.g., "cat robot vacuum video") may return a set of search results replete with these identical copies (e.g., identical copies of a particular video of a cat on an autonomous robotic vacuum cleaner) and minor modifications (e.g., a copy of the same video but with the text "lol" displayed in the top matte of a letterbox on the video), causing a lack of diversity in the set of search results. A lack of diversity may result in a negative search experience for the querying user and may reduce the chance of the querying user finding other interesting videos. For the same reason, a set of search results corresponding to videos that are very similar (e.g., a video of a shot-by-shot reenactment of the original "cat on a vacuum cleaner" video) to each other may also be suboptimal. The methods described herein attempt to reduce a lack of diversity in search results by promoting unique instances of video content (e.g., an original instance, the most interesting video among very similar videos, etc.) and suppressing videos that are duplicates or videos that are too similar to the unique instances. Although this disclosure focuses on diversifying video search results, it contemplates diversifying other types of media search results (e.g., news search results, audio search results, etc.). Furthermore, although this disclosure focuses on applying the methods described herein in the context of the social-networking system 160, it contemplates applying the same or similar methods in any other suitable context (e.g., in the context of any other system or platform with media-uploading, media-hosting, or media-sharing capabilities).

In particular embodiments, the social-networking system 160 may receive a search query inputted by a querying user (e.g., from a client system 130 of the querying user). The social-networking system 160 may retrieve an initial set of videos that match the search query. The social-networking system 160 may filter the initial set of videos to determine a filtered set of videos. The filtering may include removing, from the initial set, one or more videos that are "duplicates" of a "modal" video (e.g., the original video, an optimal instance of the video) in the initial set of videos. Duplicate videos may include videos that are identical copies or near-identical copies. A video may be identified as a duplicate video based on it having a digital fingerprint that is within a threshold degree of sameness from a digital fingerprint of a modal video. The social-networking system 160 may calculate, for each video in the filtered set, one or more similarity-scores with respect to one or more other videos in the filtered set, respectively. Each similarity-score may correspond to a degree of similarity in the features of the video with the respective other video. The social-networking system 160 may group the videos in the filtered set into a plurality of clusters. Each cluster may include videos having a similarity-score greater than a threshold similarity-score with respect to each other video in the cluster. The social-networking system 160 may send, to the client system 130 of the first user for display, a search-results interface that includes one or more search results for one or more videos in the filtered set, respectively. The search results may be organized within the search-results interface based on the respective clusters of their corresponding videos.

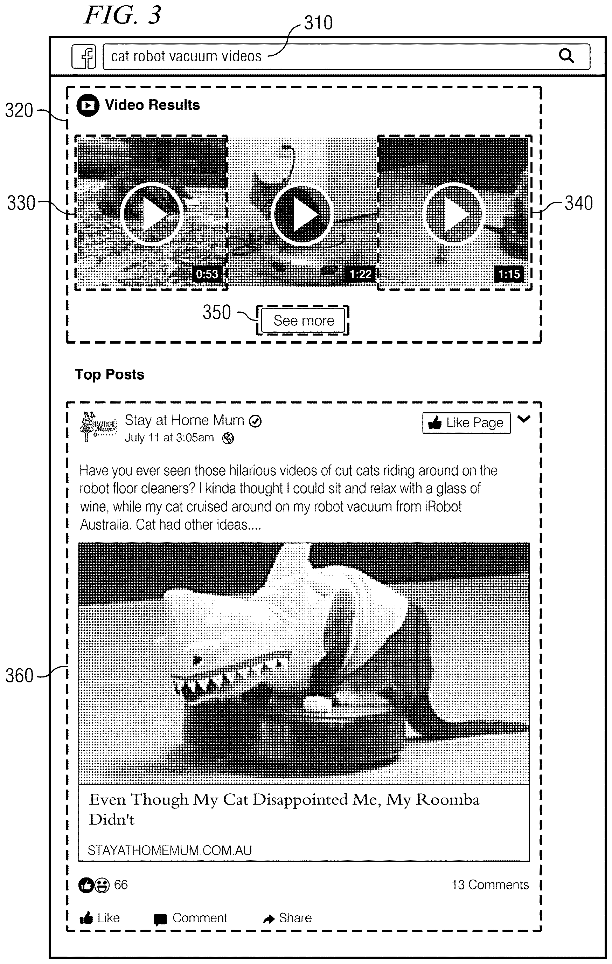

FIG. 3 illustrates an example search-results interface that includes a video-search-results module. In particular embodiments, the social-networking system 160 may receive a search query inputted by a user (e.g., from a client system 130 of the user). The social-networking system 160 may parse the search query to identify one or more n-grams that may be extracted by the social-networking system 160. In particular embodiments, the social-networking system 160 may make use of a Natural Language Processing (NLP) analysis in parsing through the search query to identify the n-grams. In general, an n-gram may be a contiguous sequence of n items from a given sequence of text. The items may be characters, phonemes, syllables, letters, words, base pairs, prefixes, or other identifiable items from the sequence of text or speech. An n-gram may include one or more characters of text (letters, numbers, punctuation, etc.) in the content of a post or the metadata associated with the post. In particular embodiments, each n-gram may include a character string (e.g., one or more characters of text). In particular embodiments, an n-gram may include more than one word. As an example and not by way of limitation, referencing FIG. 3, the social-networking system 160 may parse some or all of the text of the search query in the search field 310 (e.g., "cat robot vacuum video") to identify n-grams that may be extracted. The social-networking system 160 may identify, among others, the following n-grams: cat; robot; cat robot; robot vacuum; vacuum; cat robot vacuum. In particular embodiments, the social-networking system 160 may perform one or more suitable pre-processing steps, such as removing certain numbers and punctuation (including the "#" character in a hashtagged term), removing or replacing special characters and accents, lower-casing all text, other suitable pre-processing steps, or any combination thereof. In particular embodiments, the social-networking system 160 may use a term frequency-inverse document frequency (TF-IDF) analysis to remove insignificant terms from the search query. The TF-IDF is a statistical measure used to evaluate how important a term is to a document (e.g., a particular post on the online social network that includes one or more videos) in a collection or corpus (e.g., a set of posts on the online social network that include one or more videos). The less important a term is in the collection or corpus, the less likely it may be that the term will be extracted as an n-gram. The importance increases proportionally to the number of times a term appears in a particular document, but is offset by the frequency of the term in the corpus of documents. The importance of a term in a particular document is based in part on the term count in a document, which is simply the number of times a given term (e.g., a word) appears in the document. This count may be normalized to prevent a bias towards longer documents (which may have a higher term count regardless of the actual importance of that term in the document) and to give a measure of the importance of the term $t$ within the particular document $d$. Thus we have the term frequency $tf(t,d)$, defined in the simplest case as the occurrence count of a term $t$ in a document $d$. The inverse-document frequency ($idf$) is a measure of the general importance of the term which is obtained by dividing the total number of documents by the number of documents containing the term, and then taking the logarithm of that quotient. A high weight in TF-IDF is reached by a high term frequency in the given document and a low document frequency of the term in the whole collection of documents; the weights hence tend to filter out common terms. As an example and not by way of limitation, referencing FIG. 3, a TF-IDF analysis of the text of the search query in search field 310 (e.g., "cat robot vacuum video") may determine that the n-grams "cat" and "robot vacuum" should be extracted as n-grams, where these terms have high importance within the search query. Similarly, a TF-IDF analysis of the text in the search query may determine that the n-gram "video" should not be extracted as an n-gram, where this term has a low importance within the search query (e.g., because it may be a common term in many posts on the online social network that include videos or in video titles or descriptions, and therefore do not help narrow the set of search results in any nontrivial manner). More information on determining term importance in search queries may be found in U.S. Patent Application No. 14/877624, filed 07 October 2015, which is incorporated by reference. In particular embodiments, the social-networking system 160 may receive a search query that includes one or more media items (e.g., emojis, photos, audio files, etc.). The social-networking system 160 may translate these media items to n-grams using a video index or other media index, as described in U.S. Patent Application No. 14/952707, filed 25 November 2015, which is incorporated by reference. Although this disclosure describes receiving a particular type of query from particular sources in a particular manner, it contemplates receiving any suitable type of query from any suitable source in any suitable manner.

In particular embodiments, the social-networking system 160 may retrieve an initial set of videos that match the search query. The social-networking system 160 may do so by accessing one or more video indexes of the social-networking system 160 that index videos with associated keywords and attempting to match the extracted n-grams of the search query against the keywords of the video indexes. The initial set may include videos that are indexed with keywords matching the extracted n-grams of the search query. More information on retrieving videos based on n-grams of a search query using a video index or other media index may be found in U.S. Patent Application No. 14/952707, filed 25 November 2015, which is incorporated by reference. Although this disclosure describes retrieving a particular set of content in a particular manner, it contemplates retrieving any suitable content in any suitable manner.

In particular embodiments, each of the videos in the initial set may be associated with one or more digital fingerprints that describe one or more features of the video. In particular embodiments, the social-networking system 160 may generate a digital fingerprint of a video at any suitable time (e.g., upon upload of a video or shortly thereafter, at the time of the search query). As an example and not by way of limitation, the social-networking system 160 may generate a video digital fingerprint of the video which may be a non-reversible content-based signature (e.g., a perceptual hash) that summarizes the video. In generating the video digital fingerprint, the social-networking system 160 may use one or more methods such as key frame analysis, color, and motion changes throughout the video. For example, the social-networking system 160 may consider individual frames of the video in generating the video digital fingerprint. The social-networking system 160 may generate the video digital fingerprint by identifying, extracting, and then compressing characteristic components of the video. The social-networking system 160 may also create an audio digital fingerprint that summarizes the audio content of the video. Audio fingerprinting may include extracting acoustical features of a piece of audio content and de-correlating them. The social-networking system 160 may associate both audio digital fingerprints and video digital fingerprints to the video separately as two distinct fingerprints, or may combine them into a single audio-video digital fingerprint. The digital fingerprints may be linked to a content tag or additional relevant metadata, such as filename, title, the name of a content-creator (i.e., a creator of the video), the name of an author (i.e., an author of a communication on the online social network that included the video), copyright information, or description.

In particular embodiments, the social-networking system 160 may filter the initial set of videos to determine a filtered set of videos. The filtering may include removing, from the initial set, one or more videos that are "duplicates" of a "modal" video (e.g., the original video, an optimal instance of the video) in the initial set of videos. Duplicate videos may include videos that are identical copies or near-identical copies. A video may be identified as a duplicate video based on it having a digital fingerprint that is within a threshold degree of sameness from a digital fingerprint of a modal video. In particular embodiments, the social-networking system 160 may use a fuzzy-fingerprint-matching algorithm to identify distorted and noisy versions of the modal video. In particular embodiments, the social-networking system 160 may determine which videos are duplicates (i.e., videos that are to be removed by the filtering process) and which videos and which videos are modal (i.e., videos that are to remain in the set following the filtering process) based on one or more properties of the videos. As examples and not by way of limitation, the social-networking system 160 may determine that a video is modal if it is older (e.g., because it may be more likely to be the original video); was created by, shared by, or otherwise associated with a person for whom the querying user has a high affinity; was created by, shared by, or otherwise associated with a person who is a first-degree social connection of the querying user; was created by, shared by, or otherwise associated with a key-author who is relevant to, associated with, or knowledgeable about an associated concept (more information on identifying key-authors may be found in U.S. Patent Application No. 14/554190, filed 26 November 2014, which is incorporated by reference); has a relatively high number of likes or comments; has a relatively high view-count; or is of a relatively high image quality. In particular embodiments, a video may be the modal video if it is a video that corresponds to an embedding in a d-dimensional space that is the mode of the embeddings in its respective cluster, or if it corresponds to a vector in a d-dimensional space that is the mode of the vectors in its respective cluster. One way modal videos may be so determined is by performing a random-walk technique that, in part, computes a stationary distribution of a random walk (e.g., the probability that the embedding or a point on the vector will be visited during the random walk) and then determines as modes each local maximum on a graph that maps the distributions (or probabilities). In particular embodiments, a video may be identified as a duplicate based on any watermarks (e.g., traditional watermarks, digital watermarks) that may be present on the video, where the watermarks may be an indicator that the video is a duplicate of a modal video. A watermark may include some form of information added to or otherwise altering one or more frames of a video (or other media) that identifies it as a duplicate. It may be visually perceptible or imperceptible to a user who is viewing the video. Although this disclosure describes filtering a particular type of content in a particular manner, it contemplates filtering any suitable type of content in any suitable manner

In particular embodiments, the social-networking system 160 may calculate, for each video in the filtered set, one or more similarity-scores with respect to one or more other videos in the filtered set, respectively. Each similarity-score may correspond to a degree of similarity in the features of the video with another video. In particular embodiments, the social-networking system 160 may determine the similarity-scores for two videos based on a comparison of concepts that are associated with the videos. In particular embodiments, the concepts associated with a video may be determined based on the visual features of the video, as well as other information, as described herein. The similarity-score may be represented as a score ranging from 0 to 1, with a similarity-score of 1 corresponding to videos that are exactly the same (i.e., duplicates, if any exist) and a similarity-score of 0 corresponding to videos having no similarity whatsoever between them. Although this disclosure describes calculating a particular type of score for detecting similarity among particular content in a particular manner, it contemplates calculating any suitable type of score for detecting similarity among any suitable content in any suitable manner.

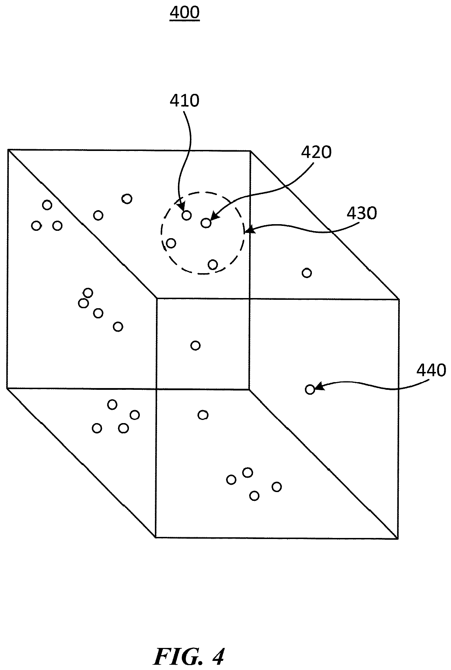

FIG. 4 illustrates an example view of an embedding space 400. In particular embodiments, the similarity-scores may be based on distances between embeddings of videos on a $d$-dimensional embedding space, where $d$ denotes any suitable number of dimensions. Although the embedding space 400 is illustrated as being a three-dimensional space, it will be understood that this is for illustrative purposes only. The embedding space 400 may be of any suitable dimension. In particular embodiments, the social-networking system 160 may, at any suitable time (e.g., upon upload of a video or shortly thereafter, at the time of the search query), map a video to the embedding space 400 as a vector representation (e.g., a d-dimensional vector). As an example of mapping a video to an embedding space, referencing FIG. 3, the video corresponding to the search result 330 and the video corresponding to the search result 340 may be mapped onto two different vectors using a deep-learning model (e.g., a neural network) based on information associated with the video. The deep-learning model may have been trained using a sequence of training data (e.g., a corpus of images from videos or photos on the online social network). The vector representation may be based on one or more concepts associated with the video, and may be a symbolic representation of the concepts associated with the video. The social-networking system 160 may use a variety of sources to determine concepts associated with the video. In particular embodiments, concepts may be determined based on one or more identified visual features of the video. The visual features may be identified based on an image-recognition process (e.g., running natively on the social-networking system 160, running on a third-party system 170) that identifies visual features present in images of a video and determines concepts associated with those visual features. As an example and not by way of limitation, referencing FIG. 3, the social-networking system 160 may identify visual features (e.g., based on shape, color, texture) corresponding to an image of a cat in the video corresponding to the search result 320 and may determine that the video is associated with the concept "Cat." In this example, the social-networking system 160 may similarly determine other concepts associated with the video (e.g., "Robotic Vacuum Cleaner," a concept describing a particular person whose face may have appeared in the video). More information on determining concepts in images may be found in U.S. Patent Application No. 13/959446, filed 05 August 2013, and U.S. Patent Application No. 14/983385, filed 29 December 2015, each of which is incorporated by reference. In particular embodiments, concepts may be determined based on one or more audio features of the video. As an example and not by way of limitation, a speech-recognition process may recognize the word "cat" being spoken by a person in the video corresponding to the search result 320, in which case, the social-networking system 160 may associate the video with the concept "Cat." As another example and not by way of limitation, a voice-recognition process may recognize the voice of a particular person (e.g., a user, a celebrity) and associate the video with a concept that describes that person (e.g., the concept that corresponds directly to the user or the celebrity). As another example and not by way of limitation, an audio-recognition process may detect that the video corresponding to the search result 320 includes a song by the artist Cat Stevens, in which case the social-networking system 160 may associate the video with the concept "Cat Stevens." In particular embodiments, associated concepts may be determined based on text associated with the video. As an example and not by way of limitation, the text may have been extracted from one or more communications (e.g., posts, reshares, comments, private messages) on the online social network that reference the video, include the video, or are otherwise associated with the video. As another example and not by way of limitation, the text may have been extracted from metadata associated with the video (e.g., the title, the filename, a description). In these examples, the social-networking system 160 may determine associated concepts by using a topic index to match the extracted text with keywords indexed with respective concepts. More information on using a topic index to determine concepts associated with text may be found in U.S. Patent Application No. 13/167701, filed 23 June 2011, and U.S. Patent Application No. 14/561418, filed 05 December 2014, each of which is incorporated by reference. In particular embodiments, associated concepts may be determined based on information associated with one or more users associated with the video. As an example and not by way of limitation, a video created by a user from India may be associated with the concepts "India," "Taj Mahal," "Hindi," or any other suitable concepts.

In particular embodiments, the different concepts associated with a video may determine the properties (e.g., magnitude, direction) of its respective vector. The vector may provide coordinates corresponding to a particular point (e.g., the terminal point of the vector) in an embedding space. The particular point may be an "embedding" for the respective video. As an example and not by way of limitation, referencing FIG. 4, the embedding 410 may be a coordinate of a terminal point of a vector representation of a first video and the embedding 410 may be a coordinate of a terminal point of a vector representation of a second video. The location of each embedding may be used to describe the concepts associated with a video. As an example and not by way of limitation, the embedding 410 may correspond to a video of a brown cat riding a robotic vacuum cleaner, the embedding 420 may correspond to a video of a black cat riding a robotic vacuum cleaner, and the embedding 440 may correspond to a video of a dog playing fetch. In particular embodiments, the social-networking system 160 may use the proximity of embeddings to determine how similar their respective videos are. As an example and not by way of limitation, referencing FIG. 4 and building on the previous example, the cat videos may be more similar to each other than the dog video. Accordingly, the embeddings 410 and 420 of the cat videos may be relatively close to each other and the embedding 440 of the dog video may be relatively far from the embeddings of the cat videos. In particular embodiments, the social-networking system 160 may determine a similarity-score for a first video with respect to a second video based on the Euclidean distance between their respective embeddings, the dot product between their respective vector representations, the cosine similarity of their respective vector representations, any other suitable technique, or any suitable combination thereof. As an example and not by way of limitation, referencing FIG. 4, the social-networking system 160 may calculate a Euclidean distance between embedding 410 and embedding 420 by applying the Pythagorean formula: $distance\ (p410, p420) = \sqrt{\sum_{i=1}^{n}(p410_i - p420_i)^2}$ , where $p410$ represents the coordinates of the point corresponding to the embedding 410 and $p420$ represents the coordinates of the point corresponding to the embedding 420. In this example, a smaller distance may translate to a higher similarity-score (i.e., the closer two embeddings are in the embedding space, the more similar their corresponding videos may be). As another example and not by way of limitation, the social-networking system 160 may calculate the cosine similarity of the vectors (i.e., the cosine of the angle between them) corresponding to the embedding 410 and the embedding 420. In this example, the similarity-score may increase as the cosine similarity of two vectors approaches 1. In particular embodiments, the similarity-score may also be determined based on a hamming distance between a binary-representation of the features or concepts of the video. As an example and not by way of limitation, the features or concepts of a video may be represented by a binary-representation of n bits (e.g., 256 bits). In this example, when calculating the similarity-score for two particular videos, the social-networking system 160 may determine a hamming distance between their respective binary-representations (e.g., by determining the number of bits that are different in the binary strings of n bits) and determine a similarity-score based on the hamming distance, with a smaller hamming distance translating to a higher similarity-score.

In particular embodiments, the social-networking system 160 may group the videos in the filtered set into a plurality of clusters. Each cluster may include videos having a similarity-score greater than a threshold similarity-score with respect to each other video in the cluster. As an example and not by way of limitation, if the threshold similarity-score is set to 0.7, and if a first video is calculated as having a similarity-score of 0.9 for a second video, the first and second videos may be grouped into a single cluster. The social-networking system 160 may perform a comparison of all the videos in the filtered set (i.e., comparing each video to each other video in the filtered set, for a total of N! comparisons) to determine the similarity of each video with respect to each other video in the set. As an example and not by way of limitation, the videos in the filtered set of N videos may be indexed as a sequence of videos represented as $(v_i)_1^N$ or $(v_1, v_2, v_3, ... , v_N)$. In this example, for each individual video, the social-networking system 160 may find similarity-scores for each other video in the sequence (from $v_1$ to $v_N$, excluding the individual video itself). In particular embodiments, the social-networking system 160 may leverage the vector and/or embedding representations in the embedding space 400 to group videos into clusters. In the embedding space 400, the threshold similarity-score may correspond to a threshold area. As an example and not by way of limitation, referencing FIG. 4, the threshold area 430 may define the boundaries of a particular cluster such that videos corresponding to embeddings within the threshold area 430 (including, for example, the embedding 410 and the embedding 420) have similarity-scores among themselves greater than the threshold similarity-score. Essentially, in this example, the social-networking system 160 may use distance as a proxy for similarity and may group "neighboring" videos into clusters. Videos that do not have a similarity-score greater than the threshold similarity-score (e.g., a threshold similarity-score of 0.7) with any other video, may be deemed to be in a cluster of one. Similarly, referencing FIG. 4, videos whose embeddings are not within a threshold area of any other videos in the embedding space 400, may be deemed to be in a cluster of one. As an example and not by way of limitation, the video corresponding to the embedding 440 may be in a cluster of one if it is not within a threshold area of any other embedding. Although this disclosure describes grouping particular content in a particular manner, it contemplates grouping any suitable content in any suitable manner.

In particular embodiments, to reduce complexity and conserve resources (particularly in the case of long videos, i.e., videos having a duration greater than a threshold duration, or large videos, i.e., videos with a file size greater than a threshold file size), the social-networking system 160 may divide a video into one or more video segments (e.g., dividing it up into individual scenes, dividing it up into equal parts) before performing the similarity-comparison methods described herein. As an example and not by way of limitation, a first video $X$ may be divided into three segments $x_1$, $x_2$, and $x_3$, and a second video $Y$ may be divided into four segments $y_1$, $y_2$, $y_3$, and $y_4$. The social-networking system 160 may then perform any suitable similarity-comparison method described herein for one or more of the individual video segments (e.g., all of the segments, random segments), determine a similarity-score for the videos from which the segments were created, and cluster the videos if their similarity-scores are greater than the threshold similarity-score. As an example and not by way of limitation, building on the previous example, the social-networking system 160 may calculate relatively high similarity-scores between the segments $x_1$ and $y_2$, $x_2$ and $y_3$, and $x_3$ and $y_4$, and may, based on these similarity-scores, determine relatively high similarity-scores between the videos $X$ and $Y$. In this example, the social-networking system 160 may group the videos $X$ and $Y$ into a cluster if their similarity-score is greater than the threshold similarity-score. In particular embodiments, a unique embedding may be created for each of the video segments, and the social-networking system 160 may cluster videos based on the one or more embeddings of one or more of their respective video segments being within the threshold area as described herein. In particular embodiments, the social-networking system 160 may map individual video segments of a particular onto individual vectors and create a combined vector from all the individual vectors (e.g., by convolving them, averaging them, or by any suitable non-linear combination technique), with the combined vector being used to determine a combined embedding for the particular video. The social-networking system 160 may then perform the described similarity-comparison methods on the combined embedding.

In particular embodiments, the social-networking system 160 may calculate, for each of the clusters, a cluster-score that predicts the level of interest a querying user might have for the cluster and/or the concepts associated with the videos in the cluster. In particular embodiments, the cluster-score of a cluster may be based on the relevance of the videos in the cluster to the search query. As an example and not by way of limitation, for the search query "cat robot vacuum video," a cluster with videos that are associated with the concepts "Cat" and "Robotic Vacuum Cleaner" may receive a relatively high cluster-score while a cluster with videos that are associated with the concepts "Dog" and "Robotic Vacuum Cleaner" may receive a relatively low cluster-score. In particular embodiments, the cluster-score may be based on an affinity between the querying user and concepts determined to be associated with the videos of the cluster. As an example and not by way of limitation, for the search query "star trek," a cluster with videos associated with the 1966 television series Star Trek may receive a higher cluster-score than a cluster with videos associated with the 2009 movie Star Trek if the querying user has a higher affinity for the former than the latter (as may be determined by the first user, for example, having liked a group on the online social network associated with the former but not having liked such a group associated with the latter). In particular embodiments, the cluster-score may be based on demographic information, geo-location information, or other personal information associated with the querying user. As an example and not by way of limitation, a cluster of videos containing Japanese-language dialogue may receive a relatively high cluster-score if the querying user is a Japanese-speaker, is from Japan, or is currently in Japan (e.g., as determined by a current geo-location of a client system 130 of the querying user). As another example and not by way of limitation, clusters of videos that are typically of interest to a particular age group may receive a relatively high cluster-score if the querying user is of the particular age group. In particular embodiments, the cluster-score may be based on current events, or currently trending or popular topics. As an example and not by way of limitation, for the search query "election debates" a cluster with videos of debates associated with a current election may receive a relatively high cluster-score and a cluster with videos of debates associated with a prior election may receive a relatively low cluster-score. As another example and not by way of limitation, for the search query "joker" while the topic of a Batman movie is trending (e.g., being discussed frequently on the online social network), a cluster with videos associated with "The Joker" (i.e., a Batman villain) may receive a relatively high cluster-score and a cluster with videos of a comedian (i.e., someone who tells jokes) may receive a relatively low cluster-score. More information on determining trending topics may be found in U.S. Patent Application No. 14/585782, filed 30 December 2014, which is incorporated by reference. In particular embodiments, the cluster-score of a cluster may be based on the number of likes or other social signals associated with the videos in the cluster, the number of total views of videos in the cluster, the length of time other users have spent viewing or interacting with video in the cluster, a click-though rate associated with the videos in the cluster (e.g., the rate at which a querying user subsequently viewed a second video, the rate at which a querying user transitioned from a modular interface to a list or modular-list interface after viewing the video), any other suitable metric for the video that may predict the querying user's interests, or any suitable combination thereof. In particular embodiments, the cluster-score of a cluster may be based on videos within the cluster being associated with a person or entity that is considered a key-author of one or more concepts associated with the search query. In particular embodiments, the cluster-score may be based on the quality of the videos within the cluster. For example, the SN may calculate a relatively high cluster-score for clusters having videos of higher audio and/or visual quality (e.g., a relatively high bit rate, frame rate, etc.) Although this disclosure describes calculating a particular score for predicting user-interest for particular groups of content in a particular manner, it contemplates calculating any suitable score for predicting user-interest in any suitable groups of content in any suitable manner

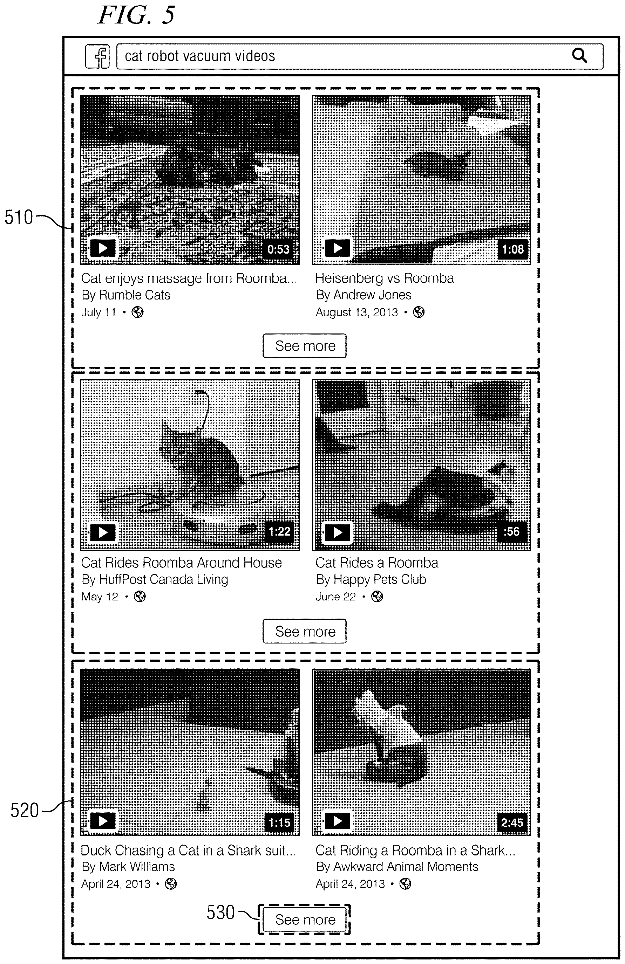

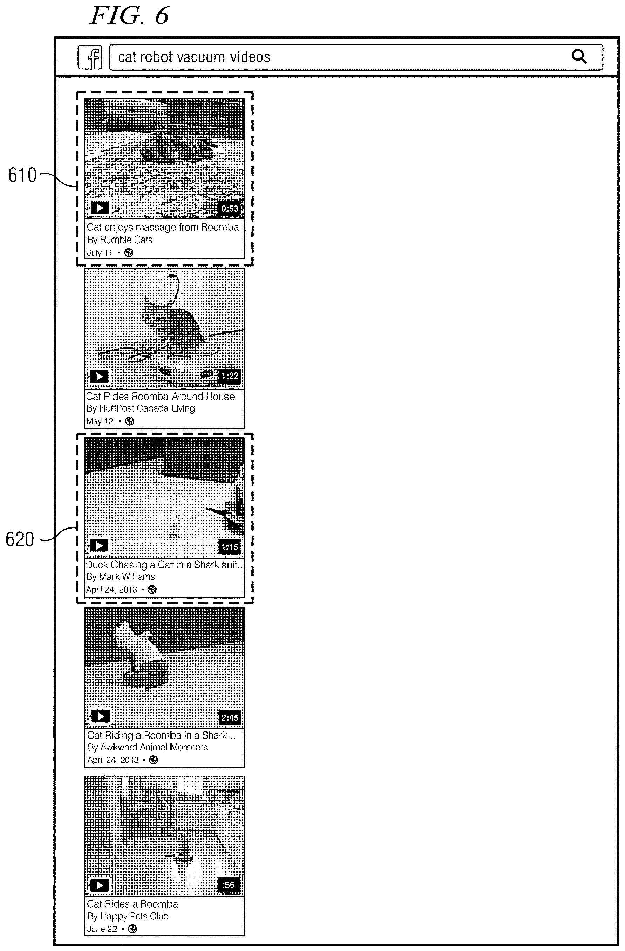

FIG. 5 illustrates an example search-results interface that displays video search results grouped by their respective clusters. FIG. 6 illustrates an example search-results interface that displays video search results in a list format. In particular embodiments, the social-networking system 160 may send, to the client system 130 of the first user for display, a search-results interface that includes one or more search results for one or more videos in the filtered set, respectively. As an example and not by way of limitation, the social-networking system 160 may send, to the client system 130 of the first user, instructions to render the display of such an interface. Each of the search results may include a link to the corresponding video, or may include the video itself. Although this disclosure describes sending particular types of interfaces to particular systems in a particular manner, it contemplates calculating any suitable type of interface to any suitable system in any suitable manner.

In particular embodiments, the social-networking system 160 may calculate, for each of the videos in each of the clusters, a video-score that predicts the level of interest a querying user might have for the respective video (e.g., in comparison to the other videos in the cluster). The video-score of a video may be based on any combination of one or more factors. In particular embodiments, the video-score of a video may be based on an affinity between the querying user and a user (or a plurality of users) associated with the video (e.g., the creator of the video itself or an instance thereof, a user tagged or mentioned in the video, a user who shared the video). As an example and not by way of limitation, referencing FIG. 6, the querying user may have a relatively high affinity for "Mark Williams," a user who created the video corresponding to the search result 620 (e.g., as determined by a history of the querying user liking posts or other content by the user "Mark Williams"). The social-networking system 160 may accordingly calculate a relatively high video-score for the video corresponding to the search result 620. In particular embodiments, the video-score of a video may be based on a degree of separation on the social graph 200 between the querying user and a user (or a plurality of users) associated with the video. As an example and not by way of limitation, again referencing FIG. 6, the querying user may be a first-degree connection of five users who shared the video corresponding to the search result 610. In this example, the social-networking system 160 may accordingly calculate a relatively high video-score for the video corresponding to the search result 610. In particular embodiments, the video-score of a video may be based on the number of likes or other social signals (e.g., other reactions, comments) associated with a video, the number of total views of the video, the length of time other users have spent viewing or interacting with the video, a click-through rate associated with the video (e.g., the rate at which a querying user subsequently viewed a second video, the rate at which a querying user transitioned from a modular interface to a list or modular-list interface after viewing the video), other suitable metrics for measuring the predicted level of interest in the video, or any suitable combination thereof. In particular embodiments, the video-score of a video may be based on the age of the video (e.g., the time-point at which the video was created, the time-point at which the video was uploaded on the online social network). As an example and not by way of limitation, the social-networking system 160 may calculate a higher video-score for an older version of a video than a newer version of the same video (e.g., because the social-networking system 160 may favor originals of videos, and it may be more likely that the older version is the original version). In particular embodiments, the video-score of a video may be based on the video being associated with a person or entity that is considered a key-author of one or more concepts featured in the video. As an example and not by way of limitation, the social-networking system 160 may calculate a relatively high video-score for a video of a cat riding a robotic vacuum cleaner if the video was created, uploaded, or shared by a company that manufactures robotic vacuum cleaners. In particular embodiments, the video-score of a video may be based on the quality of the video. As an example and not by way of limitation, the social-networking system 160 may calculate a relatively high video-score for a video that is of higher audio and/or visual quality (e.g., a relatively high bit rate, frame rate, etc.). In particular embodiments, the video-score for a particular video and/or the cluster-score for a particular cluster may be increased if a person or entity paid for or otherwise requested the promotion of the particular video and/or cluster. As an example and not by way of limitation, Acme Company may pay to increase the video-score and/or cluster-score of videos and/or clusters that feature their brand of robotic vacuum cleaners. Although this disclosure describes calculating a particular score for predicting user-interest for particular content in a particular manner, it contemplates calculating any suitable score for predicting user-interest in any suitable content in any suitable manner.

In particular embodiments, the search results may be organized within the search-results interface based on the respective clusters of their corresponding videos. The search-results interface may take any suitable form. In particular embodiments, the search-results interface may take the form of a modular interface, the video search results may be displayed within one of several modules, where each of the modules may be configured to display a particular type of content. As an example and not by way of limitation, referencing FIG. 3, video search results may be displayed within the video-search-results module 320 (e.g., a module that only displays search results corresponding to videos that match the search query) along with other modules such as the "Top Posts" module 360 (e.g., a module that only displays search results corresponding to posts that match the search query). A modular interface may be particularly appropriate when the social-networking system 160 cannot determine that the querying user has expressed a video intent (i.e., an intent to view videos). More information on modular interfaces may be may be found in U.S. Patent Application No. 14/244748, filed 03 April 2014, and U.S. Patent Application No. 15/014868, filed 03 February 2016, each of which is incorporated by reference. In particular embodiments, the search-results interface may take the form of a list interface, that displays the video search results in a list (horizontally, vertically, a scrolling format, or in any other suitable format). The list may include multiple types of content (e.g., video content, audio content, text content, or any suitable combination thereof), or it may be configured to include only videos (or another particular type of content). As an example and not by way of limitation, referencing FIG. 6, video search results may be displayed as a list of search results (e.g., as thumbnails). A list interface may be particularly appropriate when the social-networking system 160 determines that the querying user has expressed a video intent. As an example and not by way of limitation, the social-networking system 160 may determine a video intent if the user has submitted an input specifying that the search query is to be filtered for videos only. As another example and not by way of limitation, the social-networking system 160 may determine a video intent if the user included terms such as "video" in the search query (e.g., referencing FIG. 6, the term "video" in the search query "cat robot vacuum video). As another example and not by way of limitation, the social-networking system 160 may determine a video intent if the set of results retrieved when executing the search query includes a relatively large number of video search results.

In particular embodiments, the search-results interface may take the form of a modular-list interface. As an example and not by way of limitation, referencing FIG. 5, video search results may be displayed within modules such as the modules 510 and 520, each module corresponding to a single cluster. In this example, the search results within the module 510 may be of a first cluster (e.g., a cluster of videos depicting cats interacting a certain way with a robotic vacuum cleaner) and the search results within the module 520 may be of a second cluster (e.g., a cluster of videos depicting cats riding a robotic vacuum cleaner while wearing a shark costume). In particular embodiments, the social-networking system 160 may switch among different forms of the search-results interfaces. The switching may be in response to an input by the querying user. As an example and not by way of limitation, a querying user presented with the search-results interface of FIG. 3 may be able to activate the interactive element 350 (i.e., the "See more" button) to switch to a search-results interface similar to that of FIG. 5 or FIG. 6. As an example and not by way of limitation, building on the previous example, the querying user may be able to select an interactive element corresponding to a particular cluster (e.g., the cluster of the video corresponding to the video search result 330), in response to which the social-networking system 160 may switch to a list interface that displays search results corresponding to videos of that cluster. As another example and not by way of limitation, a querying user presented with the search-results interface of FIG. 5 may be able to activate the interactive element 530 (i.e., the "See more" button) to switch to the search-results interface of FIG. 6. The querying user may be able to switch back and forth among any suitable forms of search-results interface.

In particular embodiments, the video search results that are displayed and the order in which they are displayed may be based on the form of the search-results interface in which they are to be displayed. The objectives intended to be achieved by the different forms of search-results interfaces may be slightly different, and the social-networking system 160 may select and order videos differently for the different forms of search-results interfaces to achieve those different goals. As an example and not by way of limitation, although all the interfaces may be designed to present both relevant and diverse content, the list interface may be more skewed toward relevance than the modular interface. By way of a contrasting example and not by way of limitation, the modular interface may be more skewed toward providing diverse results than the list interface (e.g., to pique the querying user's interest in exploring the existing video content by showing the breadth of video content available). Accordingly, in these examples, diversity may play a bigger role in the modular interface than in the list interface, and relevance may play a bigger role in the list interface than in the modular interface. Relatedly, in particular embodiments, a machine-learning process used to determine how video search results are displayed may be adjusted for each type of interface differently to achieve their different objectives by weighting different inputs differently. As an example and not by way of limitation, with respect to the list interface, the social-networking system 160 may weight heavily the length of time other users spend on videos to determine which videos to select and how to order them (e.g., because this metric may be a positive indicator for relevance). As another example and not by way of limitation, with respect to the modular interface, the social-networking system 160 may weight heavily the click-through rate of the querying user transitioning to the list interface after viewing a particular video (e.g., because this may be a positive indicator that the video piqued the querying user's interest). Although this disclosure describes displaying and ordering particular types of search results in a particular manner, it contemplates displaying and ordering any suitable types of search result in any suitable manner.

In particular embodiments, the manner in which the search results are organized on the search-results interface may depend on the form of the search-results interface. In particular embodiments, in the modular interface, one or more videos from one or more clusters may be displayed within a video-search-results module. In particular embodiments, only video search results corresponding to videos from clusters having cluster-score greater than a threshold cluster-score may be displayed within the video-search-results module of a modular interface. As an example and not by way of limitation, referencing FIG. 3, the three video search results displayed in the video-search-results module 320 may correspond to videos from each of the three clusters with the highest cluster-scores (e.g., where the threshold cluster-score is such that only the highest-scoring three clusters can have cluster-scores greater than the threshold cluster-score). In particular embodiments, only video search results corresponding to videos having a video-score greater than a threshold video-score may be displayed within the video-search-results module. As an example and not by way of limitation, referencing FIG. 3, the three video search results displayed in the video-search-results module 320 may correspond to videos with the highest video-score within their respective clusters (e.g., where the threshold video-score is such that only the highest-scoring video can have a video-score greater than the threshold video-score). The order of the displayed video search results may be based on the cluster-score associated with the respective clusters of the respective videos. As an example and not by way of limitation, referencing FIG. 3, the cluster associated with the video corresponding to the video search result 330 may have a higher cluster-score than the cluster associated with the video corresponding to the video search result 340 (assuming the videos are organized horizontally by their respective cluster-score, in descending order).

In particular embodiments, in the list interface, a list of video search results may be displayed in an order based on the cluster to which their corresponding videos belong. The order may be based on a cluster-diversity algorithm. The cluster-diversity algorithm may ensure that there is a threshold level of cluster diversity in the list as ordered by requiring that various clusters be adequately represented by the order of the list interface (e.g., by requiring that a number of search results from each cluster be present among a top-ranked group of the video search results on the list). As an example and not by way of limitation, the cluster-diversity algorithm may require that the search results at the top of the list interface include a single video search result from each of the clusters (e.g., one that corresponds to the video with the highest video-score in its respective cluster)-i.e., a set of unique video search results. In this example, the social-networking system 160 may first display the unique video search results before displaying any other video search results. For example, referencing FIG. 6, the search query may have returned video search results corresponding to videos grouped into three different clusters, and the first three displayed video search results may correspond to the three different clusters, respectively. In particular embodiments, the other video search results may be displayed after the set of unique video search results. As an example and not by way of limitation, referencing FIG. 6, the last two displayed video search results may correspond to videos from one or more of the clusters of the videos corresponding to the first three displayed video search results. The order of the videos may further be based on their respective cluster-scores. As an example and not by way of limitation, in a set of video search results, referencing FIG. 6, the cluster corresponding to the video search result 610 may have a higher cluster-score than the cluster corresponding to the video search result 620 (assuming the videos are organized vertically by their respective cluster-score, in descending order). In particular embodiments, the social-networking system 160 may order the list based on the respective video-scores of the corresponding videos within their respective clusters. Video search results corresponding to videos with relatively high video-scores may be up-ranked on the list in the list interface. As an example and not by way of limitation, referencing FIG. 6, the first three displayed video search results may correspond to videos that have the highest video-scores within their respective clusters. In particular embodiments, the order may be based on the similarity-scores (or distance between corresponding embeddings) of the videos. As an example and not by way of limitation, a video search result corresponding to a video that shares a very high similarity-score (e.g., a similarity-score above a high-threshold similarity-score) with a video corresponding to an earlier displayed video search result (e.g., a video search result from the set of unique video search results) may be down-ranked far down the list. For similarity-scores that are not as high (e.g., a similarity-score exceeding the similarity-score threshold but not the high-threshold similarity-score), less aggressive means of reordering may be employed. As an example and not by way of limitation, such videos may not be down-ranked as far down the list. By ordering individual video search results in this manner based on the level of similarity (i.e., determined by their respective similarity-scores or distance in their respective embeddings), the social-networking system 160 may further promote diversity on an individual basis.

In particular embodiments, in the modular-list interface, the video search results may be displayed as a list of cluster-modules. Each cluster-module may correspond to a single cluster and may include a display of one or more video search results (e.g., the videos with the highest video-scores in the respective cluster). As an example and not by way of limitation, referencing FIG. 5, the module 510 may correspond to a first cluster of videos that includes the two videos displayed within and the module 520 may correspond to a second cluster of videos that includes the two videos displayed within. Each cluster module may function as a "collapsed" set of videos, such that the querying user may be able to access the other videos in the respective cluster by submitting an appropriate input (e.g., referencing FIG. 5, by selecting the interactive element 530).

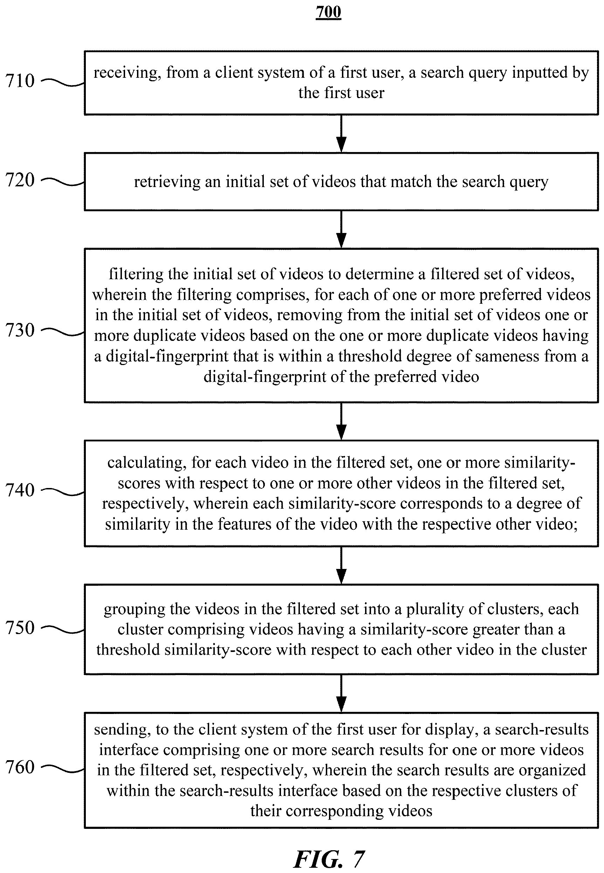

FIG. 7 illustrates an example method 700 for diversifying video search results. The method may begin at step 710, where the social-networking system 160 may receive, from a client system 130 of a first user, a search query inputted by the first user. At step 720, the social-networking system 160 may retrieve an initial set of videos that match the search query. At step 730, the social-networking system 160 may filter the initial set of videos to determine a filtered set of videos, wherein the filtering comprises, for each of one or more modal videos in the initial set of videos, removing from the initial set of videos one or more duplicate videos based on the one or more duplicate videos having a digital fingerprint that is within a threshold degree of sameness from a digital fingerprint of the modal video. At step 740, the social-networking system 160 may calculate, for each video in the filtered set, one or more similarity-scores with respect to one or more other videos in the filtered set, respectively, wherein each similarity-score corresponds to a degree of similarity in the features of the video with the respective other video. At step 750, the social-networking system 160 may group the videos in the filtered set into a plurality of clusters, each cluster comprising videos having a similarity-score greater than a threshold similarity-score with respect to each other video in the cluster. At step 760, the social-networking system 160 may send, to the client system 130 of the first user for display, a search-results interface comprising one or more search results for one or more videos in the filtered set, respectively, wherein the search results are organized within the search-results interface based on the respective clusters of their corresponding videos. Particular embodiments may repeat one or more steps of the method of FIG. 7, where appropriate. Although this disclosure describes and illustrates particular steps of the method of FIG. 7 as occurring in a particular order, this disclosure contemplates any suitable steps of the method of FIG. 7 occurring in any suitable order. Moreover, although this disclosure describes and illustrates an example method for diversifying video search results including the particular steps of the method of FIG. 7, this disclosure contemplates any suitable method for diversifying video search results including any suitable steps, which may include all, some, or none of the steps of the method of FIG. 7, where appropriate. Furthermore, although this disclosure describes and illustrates particular components, devices, or systems carrying out particular steps of the method of FIG. 7, this disclosure contemplates any suitable combination of any suitable components, devices, or systems carrying out any suitable steps of the method of FIG. 7.

Social Graph Affinity and Coefficient

In particular embodiments, the social-networking system 160 may determine the social-graph affinity (which may be referred to herein as "affinity") of various social-graph entities for each other. Affinity may represent the strength of a relationship or level of interest between particular objects associated with the online social network, such as users, concepts, content, actions, advertisements, other objects associated with the online social network, or any suitable combination thereof. Affinity may also be determined with respect to objects associated with third-party systems 170 or other suitable systems. An overall affinity for a social-graph entity for each user, subject matter, or type of content may be established. The overall affinity may change based on continued monitoring of the actions or relationships associated with the social-graph entity. Although this disclosure describes determining particular affinities in a particular manner, this disclosure contemplates determining any suitable affinities in any suitable manner.

In particular embodiments, the social-networking system 160 may measure or quantify social-graph affinity using an affinity coefficient (which may be referred to herein as "coefficient"). The coefficient may represent or quantify the strength of a relationship between particular objects associated with the online social network. The coefficient may also represent a probability or function that measures a predicted probability that a user will perform a particular action based on the user's interest in the action. In this way, a user's future actions may be predicted based on the user's prior actions, where the coefficient may be calculated at least in part on the history of the user's actions. Coefficients may be used to predict any number of actions, which may be within or outside of the online social network. As an example and not by way of limitation, these actions may include various types of communications, such as sending messages, posting content, or commenting on content; various types of observation actions, such as accessing or viewing profile interfaces, media, or other suitable content; various types of coincidence information about two or more social-graph entities, such as being in the same group, tagged in the same photograph, checked-in at the same location, or attending the same event; or other suitable actions. Although this disclosure describes measuring affinity in a particular manner, this disclosure contemplates measuring affinity in any suitable manner.

In particular embodiments, the social-networking system 160 may use a variety of factors to calculate a coefficient. These factors may include, for example, user actions, types of relationships between objects, location information, other suitable factors, or any combination thereof. In particular embodiments, different factors may be weighted differently when calculating the coefficient. The weights for each factor may be static or the weights may change according to, for example, the user, the type of relationship, the type of action, the user's location, and so forth. Ratings for the factors may be combined according to their weights to determine an overall coefficient for the user. As an example and not by way of limitation, particular user actions may be assigned both a rating and a weight while a relationship associated with the particular user action is assigned a rating and a correlating weight (e.g., so the weights total 100%). To calculate the coefficient of a user towards a particular object, the rating assigned to the user's actions may comprise, for example, 60% of the overall coefficient, while the relationship between the user and the object may comprise 40% of the overall coefficient. In particular embodiments, the social-networking system 160 may consider a variety of variables when determining weights for various factors used to calculate a coefficient, such as, for example, the time since information was accessed, decay factors, frequency of access, relationship to information or relationship to the object about which information was accessed, relationship to social-graph entities connected to the object, short- or long-term averages of user actions, user feedback, other suitable variables, or any combination thereof. As an example and not by way of limitation, a coefficient may include a decay factor that causes the strength of the signal provided by particular actions to decay with time, such that more recent actions are more relevant when calculating the coefficient. The ratings and weights may be continuously updated based on continued tracking of the actions upon which the coefficient is based. Any type of process or algorithm may be employed for assigning, combining, averaging, and so forth the ratings for each factor and the weights assigned to the factors. In particular embodiments, the social-networking system 160 may determine coefficients using machine-learning algorithms trained on historical actions and past user responses, or data farmed from users by exposing them to various options and measuring responses. Although this disclosure describes calculating coefficients in a particular manner, this disclosure contemplates calculating coefficients in any suitable manner.

In particular embodiments, the social-networking system 160 may calculate a coefficient based on a user's actions. The social-networking system 160 may monitor such actions on the online social network, on a third-party system 170, on other suitable systems, or any combination thereof. Any suitable type of user actions may be tracked or monitored. Typical user actions include viewing profile interfaces, creating or posting content, interacting with content, tagging or being tagged in images, joining groups, listing and confirming attendance at events, checking-in at locations, liking particular interfaces, creating interfaces, and performing other tasks that facilitate social action. In particular embodiments, the social-networking system 160 may calculate a coefficient based on the user's actions with particular types of content. The content may be associated with the online social network, a third-party system 170, or another suitable system. The content may include users, profile interfaces, posts, news stories, headlines, instant messages, chat room conversations, emails, advertisements, pictures, video, music, other suitable objects, or any combination thereof. The social-networking system 160 may analyze a user's actions to determine whether one or more of the actions indicate an affinity for subject matter, content, other users, and so forth. As an example and not by way of limitation, if a user frequently posts content related to "coffee" or variants thereof, the social-networking system 160 may determine the user has a high coefficient with respect to the concept "coffee". Particular actions or types of actions may be assigned a higher weight and/or rating than other actions, which may affect the overall calculated coefficient. As an example and not by way of limitation, if a first user emails a second user, the weight or the rating for the action may be higher than if the first user simply views the user-profile interface for the second user.

In particular embodiments, the social-networking system 160 may calculate a coefficient based on the type of relationship between particular objects. Referencing the social graph 200, the social-networking system 160 may analyze the number and/or type of edges 206 connecting particular user nodes 202 and concept nodes 204 when calculating a coefficient. As an example and not by way of limitation, user nodes 202 that are connected by a spouse-type edge (representing that the two users are married) may be assigned a higher coefficient than a user nodes 202 that are connected by a friend-type edge. In other words, depending upon the weights assigned to the actions and relationships for the particular user, the overall affinity may be determined to be higher for content about the user's spouse than for content about the user's friend. In particular embodiments, the relationships a user has with another object may affect the weights and/or the ratings of the user's actions with respect to calculating the coefficient for that object. As an example and not by way of limitation, if a user is tagged in a first photo, but merely likes a second photo, the social-networking system 160 may determine that the user has a higher coefficient with respect to the first photo than the second photo because having a tagged-in-type relationship with content may be assigned a higher weight and/or rating than having a like-type relationship with content. In particular embodiments, the social-networking system 160 may calculate a coefficient for a first user based on the relationship one or more second users have with a particular object. In other words, the connections and coefficients other users have with an object may affect the first user's coefficient for the object. As an example and not by way of limitation, if a first user is connected to or has a high coefficient for one or more second users, and those second users are connected to or have a high coefficient for a particular object, the social-networking system 160 may determine that the first user should also have a relatively high coefficient for the particular object. In particular embodiments, the coefficient may be based on the degree of separation between particular objects. The lower coefficient may represent the decreasing likelihood that the first user will share an interest in content objects of the user that is indirectly connected to the first user in the social graph 200. As an example and not by way of limitation, social-graph entities that are closer in the social graph 200 (i.e., fewer degrees of separation) may have a higher coefficient than entities that are further apart in the social graph 200.

In particular embodiments, the social-networking system 160 may calculate a coefficient based on location information. Objects that are geographically closer to each other may be considered to be more related or of more interest to each other than more distant objects. In particular embodiments, the coefficient of a user towards a particular object may be based on the proximity of the object's location to a current location associated with the user (or the location of a client system 130 of the user). A first user may be more interested in other users or concepts that are closer to the first user. As an example and not by way of limitation, if a user is one mile from an airport and two miles from a gas station, the social-networking system 160 may determine that the user has a higher coefficient for the airport than the gas station based on the proximity of the airport to the user.

In particular embodiments, the social-networking system 160 may perform particular actions with respect to a user based on coefficient information. Coefficients may be used to predict whether a user will perform a particular action based on the user's interest in the action. A coefficient may be used when generating or presenting any type of objects to a user, such as advertisements, search results, news stories, media, messages, notifications, or other suitable objects. The coefficient may also be utilized to rank and order such objects, as appropriate. In this way, the social-networking system 160 may provide information that is relevant to user's interests and current circumstances, increasing the likelihood that they will find such information of interest. In particular embodiments, the social-networking system 160 may generate content based on coefficient information. Content objects may be provided or selected based on coefficients specific to a user. As an example and not by way of limitation, the coefficient may be used to generate media for the user, where the user may be presented with media for which the user has a high overall coefficient with respect to the media object. As another example and not by way of limitation, the coefficient may be used to generate advertisements for the user, where the user may be presented with advertisements for which the user has a high overall coefficient with respect to the advertised object. In particular embodiments, the social-networking system 160 may generate search results based on coefficient information. Search results for a particular user may be scored or ranked based on the coefficient associated with the search results with respect to the querying user. As an example and not by way of limitation, search results corresponding to objects with higher coefficients may be ranked higher on a search-results interface than results corresponding to objects having lower coefficients.

In particular embodiments, the social-networking system 160 may calculate a coefficient in response to a request for a coefficient from a particular system or process. To predict the likely actions a user may take (or may be the subject of) in a given situation, any process may request a calculated coefficient for a user. The request may also include a set of weights to use for various factors used to calculate the coefficient. This request may come from a process running on the online social network, from a third-party system 170 (e.g., via an API or other communication channel), or from another suitable system. In response to the request, the social-networking system 160 may calculate the coefficient (or access the coefficient information if it has previously been calculated and stored). In particular embodiments, the social-networking system 160 may measure an affinity with respect to a particular process. Different processes (both internal and external to the online social network) may request a coefficient for a particular object or set of objects. The social-networking system 160 may provide a measure of affinity that is relevant to the particular process that requested the measure of affinity. In this way, each process receives a measure of affinity that is tailored for the different context in which the process will use the measure of affinity.

In connection with social-graph affinity and affinity coefficients, particular embodiments may utilize one or more systems, components, elements, functions, methods, operations, or steps disclosed in U.S. Patent Application No. 11/503093, filed 11 August 2006, U.S. Patent Application No. 12/977027, filed 22 December 2010, U.S. Patent Application No. 12/978265, filed 23 December 2010, and U.S. Patent Application No. 13/632869, filed 01 October 2012, each of which is incorporated by reference.

Advertising

In particular embodiments, an advertisement may be text (which may be HTML-linked), one or more images (which may be HTML-linked), one or more videos, audio, one or more ADOBE FLASH files, a suitable combination of these, or any other suitable advertisement in any suitable digital format presented on one or more web interfaces, in one or more e-mails, or in connection with search results requested by a user. In addition or as an alternative, an advertisement may be one or more sponsored stories (e.g., a news-feed or ticker item on the social-networking system 160). A sponsored story may be a social action by a user (such as "liking" an interface, "liking" or commenting on a post on an interface, RSVPing to an event associated with an interface, voting on a question posted on an interface, checking in to a place, using an application or playing a game, or "liking" or sharing a website) that an advertiser promotes, for example, by having the social action presented within a pre-determined area of a profile interface of a user or other interface, presented with additional information associated with the advertiser, bumped up or otherwise highlighted within news feeds or tickers of other users, or otherwise promoted. The advertiser may pay to have the social action promoted. As an example and not by way of limitation, advertisements may be included among the search results of a search-results interface, where sponsored content is promoted over non-sponsored content.

In particular embodiments, an advertisement may be requested for display within social-networking-system web interfaces, third-party web interfaces, or other interfaces. An advertisement may be displayed in a dedicated portion of an interface, such as in a banner area at the top of the interface, in a column at the side of the interface, in a GUI within the interface, in a pop-up window, in a drop-down menu, in an input field of the interface, over the top of content of the interface, or elsewhere with respect to the interface. In addition or as an alternative, an advertisement may be displayed within an application. An advertisement may be displayed within dedicated interfaces, requiring the user to interact with or watch the advertisement before the user may access an interface or utilize an application. The user may, for example view the advertisement through a web browser.

A user may interact with an advertisement in any suitable manner. The user may click or otherwise select the advertisement. By selecting the advertisement, the user may be directed to (or a browser or other application being used by the user) an interface associated with the advertisement. At the interface associated with the advertisement, the user may take additional actions, such as purchasing a product or service associated with the advertisement, receiving information associated with the advertisement, or subscribing to a newsletter associated with the advertisement. An advertisement with audio or video may be played by selecting a component of the advertisement (like a "play button"). Alternatively, by selecting the advertisement, the social-networking system 160 may execute or modify a particular action of the user.

An advertisement may also include social-networking-system functionality that a user may interact with. As an example and not by way of limitation, an advertisement may enable a user to "like" or otherwise endorse the advertisement by selecting an icon or link associated with endorsement. As another example and not by way of limitation, an advertisement may enable a user to search (e.g., by executing a query) for content related to the advertiser. Similarly, a user may share the advertisement with another user (e.g., through the social-networking system 160) or RSVP (e.g., through the social-networking system 160) to an event associated with the advertisement. In addition or as an alternative, an advertisement may include social-networking-system content directed to the user. As an example and not by way of limitation, an advertisement may display information about a friend of the user within the social-networking system 160 who has taken an action associated with the subject matter of the advertisement.

Systems and Methods

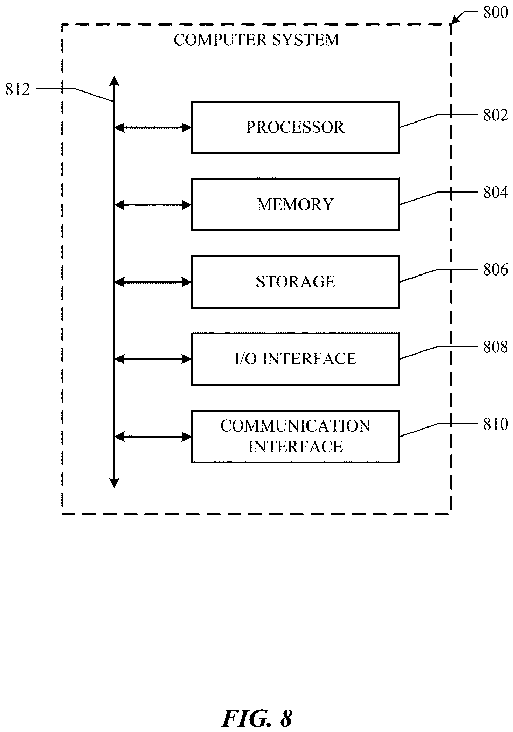

FIG. 8 illustrates an example computer system 800. In particular embodiments, one or more computer systems 800 perform one or more steps of one or more methods described or illustrated herein. In particular embodiments, one or more computer systems 800 provide functionality described or illustrated herein. In particular embodiments, software running on one or more computer systems 800 performs one or more steps of one or more methods described or illustrated herein or provides functionality described or illustrated herein. Particular embodiments include one or more portions of one or more computer systems 800. Herein, reference to a computer system may encompass a computing device, and vice versa, where appropriate. Moreover, reference to a computer system may encompass one or more computer systems, where appropriate.

This disclosure contemplates any suitable number of computer systems 800. This disclosure contemplates computer system 800 taking any suitable physical form. As example and not by way of limitation, computer system 800 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 800 may include one or more computer systems 800; be unitary or distributed; span multiple locations; span multiple machines; span multiple data centers; or reside in a cloud, which may include one or more cloud components in one or more networks. Where appropriate, one or more computer systems 800 may perform without substantial spatial or temporal limitation one or more steps of one or more methods described or illustrated herein. As an example and not by way of limitation, one or more computer systems 800 may perform in real time or in batch mode one or more steps of one or more methods described or illustrated herein. One or more computer systems 800 may perform at different times or at different locations one or more steps of one or more methods described or illustrated herein, where appropriate.

In particular embodiments, computer system 800 includes a processor 802, memory 804, storage 806, an input/output (I/O) interface 808, a communication interface 810, and a bus 812. Although this disclosure describes and illustrates a particular computer system having a particular number of particular components in a particular arrangement, this disclosure contemplates any suitable computer system having any suitable number of any suitable components in any suitable arrangement.

In particular embodiments, processor 802 includes hardware for executing instructions, such as those making up a computer program. As an example and not by way of limitation, to execute instructions, processor 802 may retrieve (or fetch) the instructions from an internal register, an internal cache, memory 804, or storage 806; decode and execute them; and then write one or more results to an internal register, an internal cache, memory 804, or storage 806. In particular embodiments, processor 802 may include one or more internal caches for data, instructions, or addresses. This disclosure contemplates processor 802 including any suitable number of any suitable internal caches, where appropriate. As an example and not by way of limitation, processor 802 may include one or more instruction caches, one or more data caches, and one or more translation lookaside buffers (TLBs). Instructions in the instruction caches may be copies of instructions in memory 804 or storage 806, and the instruction caches may speed up retrieval of those instructions by processor 802. Data in the data caches may be copies of data in memory 804 or storage 806 for instructions executing at processor 802 to operate on; the results of previous instructions executed at processor 802 for access by subsequent instructions executing at processor 802 or for writing to memory 804 or storage 806; or other suitable data.

The data caches may speed up read or write operations by processor 802. The TLBs may speed up virtual-address translation for processor 802. In particular embodiments, processor 802 may include one or more internal registers for data, instructions, or addresses. This disclosure contemplates processor 802 including any suitable number of any suitable internal registers, where appropriate. Where appropriate, processor 802 may include one or more arithmetic logic units (ALUs); be a multicore processor; or include one or more processors 802. Although this disclosure describes and illustrates a particular processor, this disclosure contemplates any suitable processor.

In particular embodiments, memory 804 includes main memory for storing instructions for processor 802 to execute or data for processor 802 to operate on. As an example and not by way of limitation, computer system 800 may load instructions from storage 806 or another source (such as, for example, another computer system 800) to memory 804. Processor 802 may then load the instructions from memory 804 to an internal register or internal cache. To execute the instructions, processor 802 may retrieve the instructions from the internal register or internal cache and decode them. During or after execution of the instructions, processor 802 may write one or more results (which may be intermediate or final results) to the internal register or internal cache. Processor 802 may then write one or more of those results to memory 804. In particular embodiments, processor 802 executes only instructions in one or more internal registers or internal caches or in memory 804 (as opposed to storage 806 or elsewhere) and operates only on data in one or more internal registers or internal caches or in memory 804 (as opposed to storage 806 or elsewhere). One or more memory buses (which may each include an address bus and a data bus) may couple processor 802 to memory 804. Bus 812 may include one or more memory buses, as described below. In particular embodiments, one or more memory management units (MMUs) reside between processor 802 and memory 804 and facilitate accesses to memory 804 requested by processor 802. In particular embodiments, memory 804 includes random access memory (RAM). This RAM may be volatile memory, where appropriate Where appropriate, this RAM may be dynamic RAM (DRAM) or static RAM (SRAM). Moreover, where appropriate, this RAM may be single-ported or multi-ported RAM. This disclosure contemplates any suitable RAM. Memory 804 may include one or more memories 804, where appropriate. Although this disclosure describes and illustrates particular memory, this disclosure contemplates any suitable memory.

In particular embodiments, storage 806 includes mass storage for data or instructions. As an example and not by way of limitation, storage 806 may include a hard disk drive (HDD), a floppy disk drive, flash memory, an optical disc, a magneto-optical disc, magnetic tape, or a Universal Serial Bus (USB) drive or a combination of two or more of these. Storage 806 may include removable or non-removable (or fixed) media, where appropriate. Storage 806 may be internal or external to computer system 800, where appropriate. In particular embodiments, storage 806 is non-volatile, solid-state memory. In particular embodiments, storage 806 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 806 taking any suitable physical form. Storage 806 may include one or more storage control units facilitating communication between processor 802 and storage 806, where appropriate. Where appropriate, storage 806 may include one or more storages 806. Although this disclosure describes and illustrates particular storage, this disclosure contemplates any suitable storage.

In particular embodiments, I/O interface 808 includes hardware, software, or both, providing one or more interfaces for communication between computer system 800 and one or more I/O devices. Computer system 800 may include one or more of these I/O devices, where appropriate. One or more of these I/O devices may enable communication between a person and computer system 800. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 808 for them. Where appropriate, I/O interface 808 may include one or more device or software drivers enabling processor 802 to drive one or more of these I/O devices. I/O interface 808 may include one or more I/O interfaces 808, where appropriate. Although this disclosure describes and illustrates a particular I/O interface, this disclosure contemplates any suitable I/O interface.

In particular embodiments, communication interface 810 includes hardware, software, or both providing one or more interfaces for communication (such as, for example, packet-based communication) between computer system 800 and one or more other computer systems 800 or one or more networks. As an example and not by way of limitation, communication interface 810 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 810 for it. As an example and not by way of limitation, computer system 800 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 800 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 800 may include any suitable communication interface 810 for any of these networks, where appropriate. Communication interface 810 may include one or more communication interfaces 810, where appropriate. Although this disclosure describes and illustrates a particular communication interface, this disclosure contemplates any suitable communication interface.

In particular embodiments, bus 812 includes hardware, software, or both coupling components of computer system 800 to each other. As an example and not by way of limitation, bus 812 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 812 may include one or more buses 812, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Miscellaneous

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

## Claims

1. A method comprising, by one or more computing systems:

   receiving, from a client system of a first user, a search query inputted by the first user;
   retrieving an initial set of videos that match the search query;
   filtering the initial set of videos to determine a filtered set of videos, wherein the filtering comprises, for each of one or more modal videos in the initial set of videos, removing from the initial set of videos one or more duplicate videos based on the one or more duplicate videos having a digital fingerprint that is within a threshold degree of sameness from a digital fingerprint of the modal video;
   calculating, for each video in the filtered set, one or more similarity-scores with respect to one or more other videos in the filtered set, respectively, wherein each similarity-score corresponds to a degree of similarity in the features of the video with the respective other video;
   grouping the videos in the filtered set into a plurality of clusters, each cluster comprising videos having a similarity-score greater than a threshold similarity-score with respect to each other video in the cluster; and

sending, to the client system of the first user for display, a search-results interface comprising one or more search results for one or more videos in the filtered set, respectively, wherein the search results are organized within the search-results interface based on the respective clusters of their corresponding videos.

2. The method of Claim 1, further comprising:

accessing a social graph comprising a plurality of nodes and a plurality of edges connecting the nodes, each of the edges between two of the nodes representing a single degree of separation between them, the nodes comprising: a first node corresponding to a first user associated with an online social network; and a plurality of second nodes that each correspond to a concept or a second user associated with the online social network.

3. The method of Claim 1 or 2, wherein the digital fingerprint of a respective video is based on one or more of a respective audio digital fingerprint or a respective video digital fingerprint.

4. The method of any of Claims 1 to 3, wherein the filtering further comprises executing a fuzzy-fingerprint matching algorithm to identify one or more distorted or noisy versions of the modal video to remove from the initial set of videos; and/or

wherein the filtering further comprises detecting the presence of a watermark on the one or more duplicate videos.

5. The method of any of Claims 1 to 4, wherein calculating the one or more similarity-scores with respect to the one or more other videos further comprises, for each video in the filtered set:

identifying one or more visual features of the video based on an image-recognition process;
determining one or more concepts associated with the video based on its visual features;
generating, in a $d$-dimensional space, an embedding for the video based on its associated concepts;
determining, for each of the one or more other videos in the filtered set, one or more concepts associated with the other video based on its visual features;
generating, in the $d$-dimensional space, one or more embeddings for the other videos based on their respective associated concepts; and
calculating, in the $d$-dimensional space, one or more distances between the embedding for the video and the respective embeddings for the other videos.

6. The method of Claim 5, wherein the one or more concepts associated with the video are further determined based on one or more identified audio features of the video; and/or

wherein the one or more concepts associated with the video are further determined based on text associated with the video, the text having been extracted from one or more communications associated with the video or from metadata associated with the video.

7. The method of any of Claims 1 to 6, wherein calculating the one or more similarity-scores with respect to the one or more other videos further comprises, for each video in the filtered set:

generating a binary representation of the video;
generating, for each of one or more other videos in the filtered set, one or more binary representations of the other video; and
determining one or more hamming distances between the binary representation of the video and the respective binary representations of the other videos.

8. The method of any of Claims 1 to 7, further comprising, for each cluster in the plurality of clusters, calculating a video-score for each video in the cluster, wherein the video-score predicts a level of interest the first user has for the video, and wherein the video-score is based on one or more of an affinity between the first user and a second user associated with the video, the number of social signals associated with the video, the age of the video, or the audiovisual quality of the video.

9. The method of Claim 8, wherein the search results are displayed within one or more modules on the search-results interface, wherein each module corresponds to a cluster in the plurality of clusters, and wherein each module displays one or more search results associated with one or more respective videos having a video-score greater than a threshold video-score;
preferably further comprising:

receiving, from the first user, an input at an interactive element corresponding to a particular cluster; and
sending, for display, one or more additional search results corresponding to one or more videos, respectively, of the particular cluster.

10. The method of any of Claims 1 to 9, wherein the search results are displayed within a video-search-results module, wherein the video-search-results module is one of a plurality of modules displayed on the search-results interface, wherein each module of the plurality of modules includes search results corresponding to objects of a single object-type, and wherein the video-search-results module displays one or more search results associated with one or more respective videos having a video-score greater than a threshold video-score; and/or
wherein the search results are displayed as a list of search results, the search results being listed in ranked order based on the respective video-scores of the corresponding videos within their respective clusters and further based on a cluster-diversity algorithm, wherein the cluster-diversity algorithm requires a number of search results from each cluster to be present among a top-ranked group of the search results;
preferably wherein a first search result corresponding to a first video of a particular cluster is up-ranked on the list and a second search result corresponding to a second video of the particular cluster is down-ranked on the list, wherein the first video has a higher video-score than the second video and wherein the second video has a similarity-score that is above an upper-threshold similarity-score.

11. The method of any of Claims 1 to 10, further comprising organizing the search results within the search-results interface, wherein the organizing comprises:

calculating, for each cluster in the plurality of clusters, a cluster-score based on a relevance of one or more concepts associated with the videos of the cluster; and
ordering the search results based on the cluster-scores of their respective clusters;
preferably wherein the cluster-score for each cluster is further based on an affinity between the first user and one or more concepts associated with the videos of the cluster.

12. The method of any of Claims 1 to 11, wherein calculating the one or more similarity-scores with respect to the one or more other videos further comprises, for each video in the filtered set:

dividing the video into one or more first-video segments;
dividing each of one or more other videos in the filtered set into one or more respective second-video segments; and
determining a degree of similarity between each of one or more of the first-video segments and each of one or more of the second-video segments, respectively.

13. One or more computer-readable non-transitory storage media embodying software that is operable when executed to perform a method according to any of Claims 1 to 12, peferably:

receive, from a client system of a first user, a search query inputted by the first user;
retrieve an initial set of videos that match the search query;
filter the initial set of videos to determine a filtered set of videos, wherein the filtering comprises, for each of one or more modal videos in the initial set of videos, removing from the initial set of videos one or more duplicate videos based on the one or more duplicate videos having a digital fingerprint that is within a threshold degree of sameness from a digital fingerprint of the modal video;
calculate, for each video in the filtered set, one or more similarity-scores with respect to one or more other videos in the filtered set, respectively, wherein each similarity-score corresponds to a degree of similarity in the features of the video with the respective other video;
group the videos in the filtered set into a plurality of clusters, each cluster comprising videos having a similarity-score greater than a threshold similarity-score with respect to each other video in the cluster; and
send, to the client system of the first user for display, a search-results interface comprising one or more search results for one or more videos in the filtered set, respectively, wherein the search results are organized within the search-results interface based on the respective clusters of their corresponding videos.

14. A system comprising: one or more processors; and a non-transitory memory coupled to the processors comprising instructions executable by the processors, the processors operable when executing the instructions to perform a method according to any of Claims 1 to 12, preferably:

receive, from a client system of a first user, a search query inputted by the first user;

retrieve an initial set of videos that match the search query;

filter the initial set of videos to determine a filtered set of videos, wherein the filtering comprises, for each of one or more modal videos in the initial set of videos, removing from the initial set of videos one or more duplicate videos based on the one or more duplicate videos having a digital fingerprint that is within a threshold degree of sameness from a digital fingerprint of the modal video;

calculate, for each video in the filtered set, one or more similarity-scores with respect to one or more other videos in the filtered set, respectively, wherein each similarity-score corresponds to a degree of similarity in the features of the video with the respective other video;

group the videos in the filtered set into a plurality of clusters, each cluster comprising videos having a similarity-score greater than a threshold similarity-score with respect to each other video in the cluster; and

send, to the client system of the first user for display, a search-results interface comprising one or more search results for one or more videos in the filtered set, respectively, wherein the search results are organized within the search-results interface based on the respective clusters of their corresponding videos.

**100**

SOCIAL-NETWORKING SYSTEM

160

162
SERVER

164
DATA STORE

150

CLIENT SYSTEM

130

WEB BROWSER
132

150

NETWORK
110

150

170

THIRD-PARTY
SYSTEM

*FIG. 1*

**FIG. 2**

200

- Song "Imagine" — 204
- App "Spotify" — 204
- User "E" — 202
- App "All About Recipes" — 204
- App "Online Poker" — 204
- User "F" — 202
- Recipe "Chicken Parmesan" — 204
- Location "Old Pro" — 204
- Movie "Shawshank Redemption" — 204
- User "C" — 202
- User "B" — 202
- User "A" — 202
- School "Stanford" — 204
- User "G" — 202
- Company "Acme" — 204
- User "D" — 202

Edges (206):
- Song "Imagine" — played — App "Spotify"
- App "Spotify" — used — User "E"
- App "Spotify" — like — User "E"
- User "E" — used ...
- App "All About Recipes" — recommended — Recipe "Chicken Parmesan"
- App "Online Poker" — played — User "F"
- Recipe "Chicken Parmesan" — cooked — User "B"
- Location "Old Pro" — like — User "B"
- Movie "Shawshank Redemption" — watched — User "B"
- App "Spotify" — used — User "C"
- Song "Imagine" — listened — User "C"
- User "C" — friend — User "B"
- User "C" — attended — School "Stanford"
- User "C" — worked at — Company "Acme"
- School "Stanford" — worked at — User "G"
- User "G" — worked at — Company "Acme"
- Company "Acme" — like — User "B"
- Company "Acme" — worked at — User "D"
- User "B" — friend — User "A"
- User "A" — friend — User "D"

## FIG. 3

310

cat robot vacuum videos 🔍

320

▶ **Video Results**

330

340

0:53    1:22    1:15

350    See more

**Top Posts**

360

Stay at Home Mum ⊘
July 11 at 3:05am 🌐

👍 Like Page ⌄

Have you ever seen those hilarious videos of cut cats riding around on the robot floor cleaners? I kinda thought I could sit and relax with a glass of wine, while my cat cruised around on my robot vacuum from iRobot Australia. Cat had other ideas....

### Even Though My Cat Disappointed Me, My Roomba Didn't

STAYATHOMEMUM.COM.AU

👍😆 66    13 Comments

👍 Like    💬 Comment    ➤ Share

FIG. 4

## FIG. 5

cat robot vacuum videos

0:53

**Cat enjoys massage from Roomba...**
By Rumble Cats
July 11 •

1:08

**Heisenberg vs Roomba**
By Andrew Jones
August 13, 2013 •

See more

1:22

**Cat Rides Roomba Around House**
By HuffPost Canada Living
May 12 •

:56

**Cat Rides a Roomba**
By Happy Pets Club
June 22 •

See more

1:15

**Duck Chasing a Cat in a Shark suit...**
By Mark Williams
April 24, 2013 •

2:45

**Cat Riding a Roomba in a Shark...**
By Awkward Animal Moments
April 24, 2013 •

See more

*FIG. 6*

<u>**700**</u>

710 — receiving, from a client system of a first user, a search query inputted by the first user

720 — retrieving an initial set of videos that match the search query

730 — filtering the initial set of videos to determine a filtered set of videos, wherein the filtering comprises, for each of one or more preferred videos in the initial set of videos, removing from the initial set of videos one or more duplicate videos based on the one or more duplicate videos having a digital-fingerprint that is within a threshold degree of sameness from a digital-fingerprint of the preferred video

740 — calculating, for each video in the filtered set, one or more similarity-scores with respect to one or more other videos in the filtered set, respectively, wherein each similarity-score corresponds to a degree of similarity in the features of the video with the respective other video;

750 — grouping the videos in the filtered set into a plurality of clusters, each cluster comprising videos having a similarity-score greater than a threshold similarity-score with respect to each other video in the cluster

760 — sending, to the client system of the first user for display, a search-results interface comprising one or more search results for one or more videos in the filtered set, respectively, wherein the search results are organized within the search-results interface based on the respective clusters of their corresponding videos

*FIG. 7*

800

COMPUTER SYSTEM

812

PROCESSOR — 802

MEMORY — 804

STORAGE — 806

I/O INTERFACE — 808

COMMUNICATION INTERFACE — 810

*FIG. 8*

Europäisches
Patentamt

European
Patent Office

Office européen
des brevets

# EUROPEAN SEARCH REPORT

Application Number

EP 17 16 8444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/036919 A1 (BOURDEV LUBOMIR [US] ET AL) 5 February 2015 (2015-02-05)<br>* paragraph [0092] - paragraph [0106]; figure 11 *<br>* paragraphs [0003], [0028], [0033] * | 1-14 | INV.<br>G06Q50/00<br>G06K9/00 |
| X | US 2011/173078 A1 (HICKS CORY [US]) 14 July 2011 (2011-07-14)<br>* paragraphs [0013] - [0015], [0019], [0021] - [0023]; figure 1 * | 1-14 | |
| A | LIN KEVIN ET AL: "Deep learning of binary hash codes for fast image retrieval", 2015 IEEE CONFERENCE ON COMPUTER VISION AND PATTERN RECOGNITION WORKSHOPS (CVPRW), IEEE, 7 June 2015 (2015-06-07), pages 27-35, XP032795530, DOI: 10.1109/CVPRW.2015.7301269 [retrieved on 2015-10-19]<br>* section 3.1; figure 1 * | 1-14 | |

TECHNICAL FIELDS
SEARCHED (IPC)

G06Q
G06K

The present search report has been drawn up for all claims

| Place of search | Date of completion of the search | Examiner |
|---|---|---|
| Munich | 14 June 2017 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 16 8444

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2017

| Patent document cited in search report | | Publication date | Patent family member(s) | | Publication date |
|---|---|---|---|---|---|
| US 2015036919 | A1 | 05-02-2015 | AU | 2014304803 A1 | 25-02-2016 |
| | | | CA | 2920193 A1 | 12-02-2015 |
| | | | CN | 105612514 A | 25-05-2016 |
| | | | JP | 2016527646 A | 08-09-2016 |
| | | | KR | 20160040633 A | 14-04-2016 |
| | | | US | 2015036919 A1 | 05-02-2015 |
| | | | WO | 2015020691 A1 | 12-02-2015 |
| US 2011173078 | A1 | 14-07-2011 | US | 2009132459 A1 | 21-05-2009 |
| | | | US | 2011173078 A1 | 14-07-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 12763162 B
- US 55607212 A
- US 50309306 A
- US 97702710 A
- US 97826510 A
- US 73186612 A
- US 73210112 A
- US 67469512 A
- US 14244748 B
- US 47060714 A
- US 56141814 A
- US 87762415 A
- US 95270715 A
- US 14952707 B
- US 55419014 A
- US 95944613 A
- US 98338515 A
- US 16770111 A
- US 58578214 A
- US 01486816 A
- US 63286912 A